# EUROPÄISCHE PATENTSCHRIFT

(11) **EP 3 978 825 B1**
(45) Veröffentlichungstag und Bekanntmachung des Hinweises auf die Patenterteilung: **09.11.2022**
(21) Anmeldenummer: 20199809.3
(22) Anmeldetag: 02.10.2020
(51) Int. Cl.: F24S 25/13, F24S 25/61, F24S 25/63, F24S 25/60

(54) **VORRICHTUNG ZUM STÜTZEN VON SOLARMODULEN, BAUSATZ, VERFAHREN ZUR HERSTELLUNG UND SOLARMODUL-ANORDNUNG**
DEVICE FOR SUPPORTING SOLAR MODULES, KIT, MANUFACTURING METHOD AND SOLAR MODULE ASSEMBLY
DISPOSITIF DE SUPPORT DES MODULES SOLAIRES, KIT, PROCÉDÉ DE FABRICATION ET AGENCEMENT DE MODULE SOLAIRE

(43) Veröffentlichungstag der Anmeldung: 06.04.2022
(73) Patentinhaber: Mounting Systems GmbH, 15834 Rangsdorf (DE)
(72) Erfinder: VACA RICO, Txaber, 48940 Leioa (ES); PHILIPPI, Carsten, 14974 Ludwigsfelde (DE)
(74) Vertreter: Bittner, Thomas L.

(56) Entgegenhaltungen:
- WO-A1-2019/143701
- WO-A2-2012/065206
- DE-U1- 9 310 063
- FR-A1- 3 087 969

## Beschreibung

Die Erfindung betrifft eine Vorrichtung zum Stützen von Solarmodulen, einen Bausatz und ein Verfahren zu dessen Herstellung sowie eine Solarmodul-Anordnung.

### Hintergrund

Solarmodule, insbesondere Photovoltaikmodule und Solarthermie-Kollektoren, können freistehend oder auf Dächern angeordnet werden. Hierbei gibt bei Schrägdächern das Dach die Ausrichtung der Solarmodule an. Bei der Montage auf einem Flachdach sowie bei einer freistehenden Montage lassen sich sowohl die Ausrichtung nach Himmelsrichtungen als auch die Winkelstellung gegenüber der Horizontalen an die Gegebenheiten anpassen, insbesondere die baulichen Rahmenbedingungen, den gemäß der geographischen Lage zu erwartenden Sonnenstand sowie eine mögliche Abschattung durch Objekte in der Umgebung.

Gemäß einer Möglichkeit für die Montage auf Flachdächern werden Solarmodule auf Stützen in Form von Füßen montiert. Die Füße können beispielsweise auf Grundschienen fixiert sein. Hierbei ist das Solarmodul an zwei oberen Füßen befestigt, welche auf gegenüberliegenden Seiten ein höheres hinteres Ende des Solarmoduls stützen. Von diesen oberen Stützen erstreckt sich das Solarmodul schräg nach unten und ist an einem niedrigeren vorderen Ende an der Grundschiene befestigt, insbesondere mittels zwei unterer Füße oder Stützen, welche das vordere Ende des Solarmoduls auf gegenüberliegenden Seiten stützen. Im Gegensatz zu einer entlang des gesamten Solarmoduls verlaufenden streckenmäßigen Stützung auf schrägen Auflageflächen bzw. -streben, ist mit den kleinen Befestigungsflächen bei derartigen Systemen eine quasi-punktförmige Lagerung realisiert. Der Winkel des Solarmoduls zur Horizontalen wird hierbei durch den Höhenunterschied und den Abstand zwischen den vorderen (unteren) und den hinteren (oberen) Stützflächen bestimmt. Derartige Systeme mit auf Grundschienen angeordneten vorderen und hinteren Füßen sind beispielsweise in den Dokumenten WO 2015 / 069112 A1 und WO 2019 / 143701 A1 beschrieben.

Für den Aufbau von derartigen Haltesystemen müssen die Stützen bzw. Füße an der Grundschiene montiert werden. Eine Montage der Füße an der Grundschiene während des Aufbaus des Systems am Einsatzort ist aufwendig und erfordert üblicherweise zusätzliches Werkzeug. Alternativ können die Füße an der Grundschiene vormontiert sein. Beispielsweise können Stützen als mit einem Grundprofil verbundene ausklappbare Profile gebildet sein.

### Zusammenfassung

Aufgabe der Erfindung ist es, verbesserte Technologien für Haltesysteme für Solarmodule anzugeben, mit denen eine vereinfachte Montage von Solarmodulen auf Flachdächern oder freistehend ermöglicht ist, bei der insbesondere Stützen an einer Grundschiene flexibel und leicht zu montieren sind.

Zur Lösung der Aufgabe ist eine Vorrichtung zum Stützen von Solarmodulen nach dem unabhängigen Anspruch 1 geschaffen. Weiterhin sind ein Bausatz sowie ein Verfahren zum Herstellen Vorrichtung zum Stützen von Solarmodulen sowie eine Solarmodul-Anordnung nach weiteren Ansprüchen bereitgestellt.

Gemäß einem Aspekt ist eine Vorrichtung zum Stützen von Solarmodulen geschaffen. Die Vorrichtung weist eine Grundschiene mit einer ersten Aufnahmeöffnung, eine an der Grundschiene angeordneten Stütze für das Halten eines Endes eines Solarmoduls, mit einem ersten Verbindungselement, welches in der ersten Aufnahmeöffnung angeordnet ist, und eine Sicherungsschiene auf, welche die Grundschiene wenigstens teilweise umgreifend auf der Grundschiene angeordnet und entlang der Grundschiene zwischen einer ersten Position und einer zweiten Position beweglich ist. Die Sicherungsschiene verschließt die erste Aufnahmeöffnung in der zweiten Position zumindest teilweise, derart, dass eine Bewegung des ersten Verbindungselements aus der ersten Aufnahmeöffnung heraus verhindert ist. In der ersten Position gibt die Sicherungsschiene die erste Aufnahmeöffnung frei, derart, dass eine Bewegung des ersten Verbindungselements aus der ersten Aufnahmeöffnung heraus ermöglicht ist.

Die Grundschiene kann mit einer Profilschiene gebildet sein. Insbesondere kann die Grundschiene mit einem abgelängten, beispielsweise abgeschnittenen oder abgescherten, Abschnitt eines Metall- oder Kunststoffprofils gebildet sein, insbesondere eines Hohlprofils. In beispielhaften Ausgestaltungen kann das Verbindungselement ein Stift oder Bolzen sein, welcher in Öffnungen, insbesondere der Aufnahmeöffnung, der Grundschiene angeordnet werden kann.

Gemäß einem weiteren Aspekt ist ein Bausatz für eine Vorrichtung nach mindestens einem der vorangehenden Ansprüche mit einer Grundschiene, aufweisend eine erste Aufnahmeöffnung, einer Stütze für das Halten eines Endes eines Solarmoduls, aufweisend ein erstes Verbindungselement, und einer Sicherungsschiene geschaffen. Hierbei ist die Stütze eingerichtet, für das Herstellen einer Vorrichtung zum Stützen von Solarmodulen an der Grundschiene angeordnet zu werden und das erste Verbindungselement ist eingerichtet, hierbei in der ersten Aufnahmeöffnung angeordnet zu werden. Die Sicherungsschiene ist eingerichtet, die Grundschiene wenigstens teilweise umgreifend auf der Grundschiene angeordnet und entlang der Grundschiene zwischen einer ersten Position und einer zweiten Position bewegt zu werden. Die Sicherungsschiene verschließt die erste Aufnahmeöffnung in der zweiten Position zumindest teilweise, derart, dass eine Bewegung des ersten Verbindungselements aus der ersten Aufnahmeöffnung heraus verhindert ist. In der ersten Position gibt die Sicherungsschiene die erste Aufnahmeöffnung frei, derart, dass eine Bewegung des ersten Verbindungselements aus der ersten Aufnahmeöffnung heraus ermöglicht ist.

Gemäß noch einem weiteren Aspekt ist ein Verfahren zum Herstellen einer Vorrichtung zum Stützen von Solarmodulen geschaffen. Gemäß dem Verfahren wird eine Grundschiene mit einer ersten Aufnahmeöffnung bereitgestellt. Eine Stütze für das Halten eines Endes eines Solarmoduls wird mit einem ersten Verbindungselement wird an der Grundschiene angeordnet, wobei das erste Verbindungselement in der ersten Aufnahmeöffnung angeordnet wird. Eine Sicherungsschiene wird auf der Grundschiene und diese zumindest teilweise umgreifend in einer ersten Position angeordnet, in der die Sicherungsschiene die erste Aufnahmeöffnung freigibt, derart, dass eine Bewegung des ersten Verbindungselements aus der ersten Aufnahmeöffnung heraus ermöglicht ist. Die Sicherungsschiene wird entlang der Grundschiene von der ersten Position in eine zweite Position bewegt, in der die Sicherungsschiene die erste Aufnahmeöffnung zumindest teilweise verschließt, derart, dass eine Bewegung des ersten Verbindungselements aus der ersten Aufnahmeöffnung heraus verhindert ist.

Die Schritte des Verfahrens können in einer anderen als der angegebenen Reihenfolge durchgeführt werden. Insbesondere kann das Anordnen der Sicherungsschiene in der ersten Position vor dem Anordnen der Stütze an der Grundschiene und / oder zumindest teilweise parallel hierzu erfolgen.

Gemäß einem zusätzlichen Aspekt ist eine Solarmodul-Anordnung bereitgestellt. Die Solarmodul-Anordnung weist eine erste Vorrichtung gemäß der Offenbarung, eine zweite Vorrichtung gemäß der Offenbarung sowie ein Solarmodul auf. Die erste Vorrichtung und die zweite Vorrichtung sind zueinander derart angeordnet und ausgerichtet, dass die Grundschiene der ersten Vorrichtung und die Grundschiene der zweiten Vorrichtung im Wesentlichen parallel verlaufen und die Stütze der ersten Vorrichtung der Stütze der zweiten Vorrichtung direkt gegenüber angeordnet ist. Das Solarmodul ist mit einer ersten Seite auf der ersten Vorrichtung angeordnet, wobei ein Ende des Solarmoduls im Bereich der ersten Seite von der Stütze der ersten Vorrichtung gehalten wird, und mit einer der ersten Seite gegenüberliegenden zweiten Seite auf der zweiten Vorrichtung angeordnet, wobei das Ende des Solarmoduls im Bereich der zweiten Seite von der Stütze der zweiten Vorrichtung gehalten wird. Die Sicherungsschiene der ersten Vorrichtung und die Sicherungsschiene der zweiten Vorrichtung sind in der jeweiligen zweiten Position angeordnet, derart, dass die jeweilige erste Aufnahmeöffnung der Grundschienen der ersten und der zweiten Vorrichtung zumindest teilweise verschlossen sind und eine Bewegung des jeweiligen ersten Verbindungselements der ersten und der zweiten Vorrichtung aus der jeweiligen ersten Aufnahmeöffnung heraus verhindert ist.

Ein im Wesentlichen paralleler Verlauf der Grundschienen der ersten und der zweiten Vorrichtung bedeutet einen im Rahmen der üblichen Montagetoleranzen bei der Montage von Solarmodulen parallelen Verlauf der Grundschienen. Eine Anordnung der Stütze der ersten Vorrichtung direkt gegenüber der Stütze der zweiten Vorrichtung kann insbesondere bedeuten, dass eine senkrecht zu den Grundschienen der ersten und der zweiten Vorrichtung verlaufende Gerade durch einen Punkt der Stütze der ersten Vorrichtung auch durch den gleichen Punkt der Stütze der zweiten Vorrichtung verläuft oder von diesem Punkt unter einem kleinen Abstand verläuft. Die im Wesentlichen parallele Anordnung von Grundschienen und Anordnung von Stützen direkt einander gegenüber ist insbesondere erfüllt, wenn eine Anordnung einer Vielzahl von Solarmodulen neben- und entlang von Grundschienen hintereinander ermöglicht ist, ohne dass es zwischen jeweiligen Rahmen der Solarmodule zu Beeinträchtigungen untereinander kommt, beispielsweise Kollisionen oder Überschneidungen.

Bei einem Solarmodul im Sinne der Offenbarung kann es sich insbesondere um ein Photovoltaikmodul oder ein Solarthermie-Kollektor handeln.

Die Vorrichtung kann mit einem Sicherungselement gebildet sein, welches eingerichtet ist, die Sicherungsschiene in der zweiten Position zu sichern, derart, dass eine Bewegung der Sicherungsschiene von der zweiten Position in die erste Position verhindert ist. Somit ist die Sicherungsschiene zwischen der ersten und der zweiten Position beweglich, wobei die Bewegung von dem Sicherungselement begrenzt oder verhindert wird, so dass das erste Verbindungselement nicht dadurch freigegeben wird, dass sich die Sicherungsschiene weit genug für eine Freigabe aus der zweiten Position bewegt.

Das Sicherungselement kann werkzeuglos zwischen einer Sicherungsstellung, in der eine Bewegung der Sicherungsschiene von der zweiten Position in die erste Position verhindert ist, und einer Freigabestellung beweglich sein, in der eine Bewegung der Sicherungsschiene von der zweiten Position in die erste Position möglich ist. Werkzeuglos bedeutet im Sinne der Offenbarung, dass eine Bewegung des Sicherungselements zwischen der Sicherungsstellung und der Freigabestellung möglich ist, ohne dass eine Nutzer ein Werkzeug einsetzen muss, insbesondere also mit der bloßen Hand zu erreichen ist.

Beispielsweise kann vorgesehen sein, dass das Sicherungselement mit einem Rastelement gebildet ist welches in der Sicherungsstellung in eine entsprechende Aussparung der Sicherungsschiene eingreift, insbesondere federnd. Alternativ kann das Rastelement an der Sicherungsschiene angeordnet sein und in eine entsprechende Aussparung an einem anderen Element der Vorrichtung, beispielsweise der Grundschiene, eingreifen. In der Freigabestellung ist das Rastelement aus der zugeordneten Aussparung heraus bewegt. Hierbei kann das Rastelement in der Sicherungsstellung die Bewegung der Sicherungsschiene verhindern, wobei die Sicherung durch Aufbringen einer Kraft, welche über einem bestimmten Schwellenwert liegt, jedoch überwunden werden kann, wobei sich das Rastelement aus der zugeordneten Aussparung in die Freigabestellung bewegt und eine Bewegung der Sicherungsschiene ermöglicht ist. Insbesondere kann vorgesehen sein, eine entsprechende Kraft mittels eines starken Ziehens an der Sicherungsschiene in Richtung der ersten Position aufzubringen. Rastelemente können beispielsweise mit federnden Nasen, Druckstücken oder Federstiften bereitgestellt sein.

Alternativ kann das Sicherungselement ein werkzeuglos einsetzbares Verbindungselement sein, beispielsweise ein in eine entsprechende Öffnung einzusetzender Sicherungsstift oder eine Flügelschraube.

In alternativen Ausgestaltungen kann vorgesehen sein, dass eine Fixierung der Sicherungsschiene in der zweiten Position unter Einsatz eines Werkzeugs erfolgt. Beispielsweise kann die Sicherungsschiene durch Schrauben, Nieten, Kleben oder Schweißen in der zweiten Position gesichert werden.

Die Sicherungsschiene kann mit einer Verbindungsschiene gebildet sein, welche eingerichtet ist, die Grundschiene mit einer weiteren Grundschiene einer weiteren Vorrichtung zu verbinden. Insbesondere für das Bilden eines Haltesystems für Solarmodule kann hierbei eine Nutzung ohnehin vorhandener Elemente durch eine entsprechende Anpassung der Verbindungsschiene ermöglicht sein. Hierdurch kann ein kompakteres System bereitgestellt sein, welches eine vereinfachte Handhabung ermöglicht.

Die Stütze kann mehrere erste Verbindungselemente aufweisen. Beispielweise kann die Stütze zwei erste Verbindungselemente aufweisen, welche zum Beispiel als Stifte ausgebildet sind und sich in entgegengesetzte Richtungen quer zu einer Erstreckungsrichtung der Grundschiene von der Stütze weg erstrecken. Hierbei kann sich die erste Aufnahmeöffnung durch gegenüberliegende Wandungen der Grundschiene erstrecken, so dass die zwei ersten Verbindungselemente auf jeweils einer Wandung der Grundschiene zu liegen kommen, wenn die ersten Verbindungselemente in der ersten Aufnahmeöffnung angeordnet sind, und so die Stütze beidseitig auf der Grundschiene abstützen.

Allgemein kann ein Verbindungselement im Sinne der Offenbarung als separates Bauteil bereitgestellt sein, welche an anderen Komponenten, beispielsweise einer Stütze bzw. einem Stützenelement, angeordnet und fixiert wird. Alternativ kann ein Verbindungselement Teil der Komponente sein, beispielsweise eine Ausformung einer solchen Komponente, und somit bereits beim Herstellungsprozess der betreffenden Komponente an dieser angeordnet werden.

Die erste Aufnahmeöffnung kann zumindest zu einer Oberseite der Grundschiene hin geöffnet sein und die Sicherungsschiene kann in der zweiten Position die erste Aufnahmeöffnung auf der Oberseite der Grundschiene zumindest teilweise bedecken. Beispielsweise kann die Aufnahmeöffnung als nach oben offene Aussparung der Grundschiene ausgestaltet sein, welche sich über die gesamte Breite der Grundschiene erstreckt und in welche quer zu einer Erstreckungsrichtung der Grundschiene verlaufende Verbindungselemente von oben eingelegt werden können. Alternativ kann eine Aufnahmeöffnung mit einer seitlich begrenzten Öffnung in einer Oberseite der Grundschiene gebildet sein, beispielsweise mit einer Bohrung in der Oberseite der Grundschiene. In derartigen Ausgestaltungen können beispielsweise senkrecht verlaufende Verbindungselemente, beispielsweise senkrecht angeordnete Stifte, von oben in die Aufnahmeöffnung eingesetzt oder eingesteckt werden. Als weitere Alternative kann eine zu einer Seite der Grundschiene geöffnete Aufnahmeöffnung bereitgestellt sein, welche analog zu den Ausführungen mit nach oben geöffneter Aufnahmeöffnung ausgestaltet sein können und in welche entsprechende Verbindungselemente von der betreffenden Seite der Grundschiene eingebracht werden können.

Die Grundschiene kann eine zweite Aufnahmeöffnung aufweisen. Die die Stütze kann eingerichtet sein, mit dem ersten Verbindungselement in der ersten Aufnahmeöffnung oder in der zweiten Aufnahmeöffnung angeordnet zu werden. Hierbei kann die Sicherungsschiene die zweite Aufnahmeöffnung in der zweiten Position zumindest teilweise verschließt, derart, dass eine Bewegung des ersten Verbindungselements aus der zweiten Aufnahmeöffnung heraus verhindert ist. Alternativ oder zusätzlich kann die Sicherungsschiene entlang der Grundschiene in eine dritte Position beweglich sein, in der die Sicherungsschiene zumindest die zweite Aufnahmeöffnung zumindest teilweise verschließt, derart, dass eine Bewegung des ersten Verbindungselements aus der zweiten Aufnahmeöffnung heraus verhindert ist. In unterschiedlichen Ausgestaltungen kann die Sicherungsschiene die erste Aufnahmeöffnung in der dritten Position zumindest teilweise verschließen oder freigeben. Die Sicherungsschiene kann in der dritten Position mittels eines Sicherungselements sicherbar sein. Hierbei können die im Zusammenhang mit der Sicherung der Sicherungsschiene in der zweiten Position erläuterten Ausgestaltungen entsprechend vorgesehen sein. Die Sicherungsschiene kann sowohl in der zweiten als auch in der dritten Position sicherbar sein. Die Sicherung in der zweiten und in der dritten Position kann mit demselben Sicherungselement oder mit unterschiedlichen Sicherungselementen vorgesehen sein.

Die Stütze kann in einer ersten Haltestellung angeordnet sein, in der die Stütze eingerichtet ist, ein Solarmodul in einem ersten Winkel relativ zu der Grundschiene zu halten, wenn das erste Verbindungselement in der ersten Aufnahmeöffnung angeordnet ist. Wenn das erste Verbindungselement in der zweiten Aufnahmeöffnung angeordnet ist, kann die Stütze in einer zweiten Haltestellung angeordnet sein, in der die Stütze eingerichtet ist, ein Solarmodul in einem zweiten Winkel relativ zu der Grundschiene zu halten, der von dem ersten Winkel verschieden ist.

Die Stütze kann mit einem ersten Stützenelement und einem zweiten Stützenelement gebildet sein, welche beweglich miteinander verbunden, derart, dass das erste Stützenelement relativ zu dem zweiten Stützenelement zwischen einer ersten Stellung und einer zweiten Stellung beweglich ist. Es kann vorgesehen sein, dass die Stütze sich bis zu einer ersten Höhe über der Grundschiene erstreckt, wenn das erste Stützenelement in der ersten Stellung angeordnet ist, und sich bis zu einer zweiten Höhe über der Grundschiene erstreckt, wenn das erste Stützenelement in der zweiten Stellung angeordnet ist, wobei die zweite Höhe von der ersten Höhe verschieden ist.

Eine Höhe der Stütze über der Grundschiene kann insbesondere definiert sein durch einen Abstand von einer Oberseite der Grundschiene bis zu einem obersten Punkt der Stütze über der Oberseite der Grundschiene, wobei die Oberseite der Grundschiene und der oberste Punkt der Stütze im Hinblick auf eine horizontale Ausrichtung der Grundschiene auf oder über einem Untergrund der Vorrichtung definiert ist, also beispielsweise einem Boden oder einem Flachdach. Das obere Ende des Solarmoduls kann bei einem unter einem Winkel zur Horizontalen angeordneten Solarmodul durch die obersten Kante der Solarmoduls definiert sein, wobei die oberste Kante des Solarmoduls im Hinblick auf eine horizontale Ausrichtung der Grundschiene auf oder über einem Untergrund der Vorrichtung definiert ist.

Das erste Stützenelement und das zweite Stützenelement können gleich ausgestaltet sein und zur Ausbildung der oberen Stütze miteinander verbunden werden. Zum Beispiel können das erste Stützenelement und das zweite Stützenelement die gleiche Form aufweisen und zueinander um einen Winkel von 180 Grad um eine Längsachse verdreht angeordnet und miteinander verbunden sein, beispielsweise an einem Gelenkpunkt.

Die Stütze kann ein zweites Verbindungselement aufweisen. Insbesondere kann vorgesehen sein, dass das erste Verbindungselement an dem ersten Stützenelement angeordnet ist und das zweite Verbindungselement an dem zweiten Stützenelement angeordnet ist. Das zweite Verbindungselement kann in einer weiteren Aufnahmeöffnung der Grundschiene ortsfest angeordnet sein. Hierbei bedeutet eine ortsfeste Anordnung des zweiten Verbindungselements im Sinne der Offenbarung, dass das zweite Verbindungselement nicht gegenüber der Grundschiene verschiebbar, also translatorisch beweglich, ist. Eine Rotation des zweiten Verbindungselements kann hierbei ermöglicht sein. Das zweite Verbindungselement kann mittels der Sicherungsschiene oder mittels einer weiteren Sicherungsschiene in der weiteren Aufnahmeöffnung sicherbar sein. Hierbei können die im Zusammenhang mit der Sicherung des ersten Verbindungselements erläuterten Ausgestaltungen entsprechend vorgesehen sein. Die Stütze kann mehrere an dem zweiten Stützenelemente angeordnete zweite Verbindungselemente aufweisen. Die bezüglich der mehreren ersten Verbindungselemente erläuterten Ausführungen können für die mehreren zweiten Verbindungselemente entsprechend vorgesehen sein.

Mit den Stützenelementen der Vorrichtung können Stützstrukturen zur Stützung eines Solarmoduls gebildet sein. Insbesondere können die Stützenelemente als Gussteile, beispielsweise aus Metallguss, vorzugsweise Aluminiumguss, gebildet sein. Alternativ können die Stützenelemente mit abgelängten Profilen gebildet sein. In diesem Fall können die Stützenelemente nachbearbeitet sein, insbesondere durch Entgraten.

In alternativen Ausgestaltungen kann die Stütze in sich nicht beweglich sein und eine Winkeleinstellung eines an der Vorrichtung anzuordnenden Solarmoduls kann durch eine Positionierung einer Unterseite der Stütze an der Grundschiene und / oder durch eine Positionierung einer Oberseite der Stütze im Bereich des Solarmoduls vornehmbar sein.

Die Stütze kann eine obere Stütze für das Halten eines oberen Endes eines Solarmoduls sein. Die obere Stütze kann eingerichtet sein, ein oberes Ende eines Solarmoduls unter unterschiedlichen Winkeln des Solarmoduls gegenüber der Grundschiene zu halten. Alternativ kann die obere Stütze kann eingerichtet sein, ein oberes Ende eines Solarmoduls unter einem Winkel des Solarmoduls gegenüber der Grundschiene zu halten. Hierbei kann die obere Stütze für unterschiedliche Winkel des Solarmoduls einstellbar und / oder an der Grundschiene anzuordnen sein oder eine für einen vorbestimmten Winkel eingerichtete Stütze sein.

Zusätzlich kann die Vorrichtung eine an der Grundschiene angeordnete untere Stütze für das Halten eines unteren Endes eines Solarmoduls aufweisen. Die untere Stütze kann eingerichtet sein, ein unteres Ende eines Solarmoduls unter unterschiedlichen Winkeln des Solarmoduls gegenüber der Grundschiene zu halten. Alternativ kann die untere Stütze kann eingerichtet sein, ein unteres Ende eines Solarmoduls unter einem Winkel des Solarmoduls gegenüber der Grundschiene zu halten. Hierbei kann die untere Stütze für unterschiedliche Winkel des Solarmoduls einstellbar und / oder an der Grundschiene anzuordnen sein. Mit der unteren Stütze und der oberen Stütze kann die Anordnung für das Ausbilden eines Haltesystems für Solarmodule mit hohen und niedrigen Füßen eingerichtet sein.

Die obere und die untere Stütze können jeweils ein oder mehrere Verbindungselemente zur Anordnung in einer oder mehreren entsprechenden Aufnahmeöffnungen der Grundschiene aufweisen. Hierbei können die verschiedenen im Zusammenhang mit der Stütze der Vorrichtung erläuterten Ausführungen jeweils für eine oder beide der oberen Stütze und der unteren Stütze vorgesehen sein. Die obere und die untere Stütze können mit der Sicherungsschiene sicherbar sein. Alternativ kann eine der oberen und der unteren Stütze mit der Sicherungsschiene sicherbar sein und die andere der oberen und der unteren Stütze kann mit einer weiteren Sicherungsschiene sicherbar sein, wobei die im Zusammenhang mit der Sicherungsschiene erläuterten Ausführungen für die weitere Sicherungsschiene entsprechend vorgesehen sein können.

In alternativen Ausgestaltungen kann die Stütze eine untere Stütze für das Halten eines unteren Endes eines Solarmoduls sein und die Vorrichtung kann zusätzlich eine obere Stütze für das Halten eines oberen Endes eines Solarmoduls aufweisen, welche nicht mittels der Sicherungsschiene sicherbar ist.

Die Grundschiene kann eingerichtet sein, ein Kabel eines Solarmoduls aufzunehmen und zu führen. Hierzu kann die Grundschiene eine oder mehrere Kabelaufnahmeeinrichtungen aufweisen. Beispielsweise können Kabelaufnahmeeinrichtungen mit Kanälen zur Führung von Kabeln, insbesondere entlang des Verlaufs der Grundschiene. Mit der Aufnahme und Führung des Kabels in der Grundschiene, insbesondere in einer oder mehreren Kabelaufnahmeeinrichtungen, kann das Kabel vor Beschädigung geschützt sein, insbesondere gegen eine Beschädigung durch scharfe Kanten der Grundschiene oder anderer Komponenten der Vorrichtung. Hierdurch kann auch bei der Verwendung abgelängter Profilschienen in der Vorrichtung eine schnelle und sichere Verlegung von Kabeln ermöglicht sein. Die Grundscheine kann für die Aufnahme und Führung mehrerer Kabel eingerichtet sein.

Eine oder mehrere Kabelaufnahmeeinrichtungen können mit der Grundschiene selbst gebildet sein. Insbesondere kann ein die Grundschiene bildendes Profil so ausgestaltet sein, dass es eine Kabelführung erlaubt. Beispielsweise kann die Grundschiene die Form eines Kabelkanals haben. Der Abstand zwischen einem inneren Schienenboden und anderen, darüber liegenden Elementen wie Stiften oder Stützen kann so dimensioniert sein, dass ein Stecker, insbesondere ein einem entsprechenden Standard entsprechender Stecker, eines Kabels eines Solarmoduls durch einen mit dem Abstand gebildeten Freiraum bewegt werden kann. Die Grundschiene kann eingerichtet sein, mehrere Kabel aufzunehmen. Insbesondere kann die Grundschiene für die Aufnahme mehrerer Kabel dimensioniert sein.

Die Grundschiene kann somit neben einer strukturellen Funktion in der Vorrichtung zusätzlich die Funktion eines Kabelkanals übernehmen. Hierdurch kann die Notwendigkeit entfallen, zusätzliche Einrichtungen zur Kabelführung bereitzustellen. Somit kann eine Kostensenkung erreicht sein, insbesondere durch eine Reduzierung von Produktions- Logistik und Montagekosten.

Weiterhin kann die Sicherungsschiene und / oder eine Verbindungsschiene, insbesondere eine mit einer Verbindungsschiene gebildete Sicherungsschiene, eingerichtet sein ein Kabel eines Solarmoduls aufzunehmen und zu führen. Die oben dargelegten Ausführungen zur Ausgestaltung der Grundschiene für die Aufnahme und Führung eines Kabels eines Solarmoduls können hierbei entsprechend vorgesehen sein.

Unabhängig von der sonstigen Ausgestaltung der Vorrichtung sind mit der Offenbarung eine Grundschiene und eine Sicherungsschiene für ein Haltesystem für Solarmodule, für eine Solarmodul-Anordnung oder für eine Vorrichtung zum Stützen von Solarmodulen bereitgestellt, die eingerichtet ist, ein Kabel eines Solarmoduls aufzunehmen und zu führen. Hierbei gelten die obigen Ausführungen zu der Einrichtung der Grundschiene der Vorrichtung für das Aufnehmen und Führen eines Kabels entsprechend.

Die Grundschiene kann dafür eingerichtet sein, dass eine Seite einer Ballasthaltevorrichtung auf ihr angeordnet wird, derart, dass die Ballasthaltevorrichtung auf der Grundschiene zumindest abschnittsweise aufliegt und die Stütze eingerichtet ist, zumindest abschnittsweise in wenigstens einer Öffnung der Ballasthaltevorrichtung angeordnet zu werden, wenn diese auf der Grundschiene zumindest abschnittsweise aufliegt, wobei die Stütze derart geformt ist, dass sie hierbei eine Bewegung der Ballasthaltevorrichtung nach oben im Wesentlichen verhindert. Mit der Formgebung der Stütze ist in einer Bewegungsrichtung der Ballasthaltevorrichtung nach oben ein Formschluss zwischen der Stütze und der Ballasthaltevorrichtung hergestellt, zumindest insoweit, dass eine Bewegung der Ballasthaltevorrichtung nach oben im Wesentlichen verhindert ist. In andere Richtungen kann eine Bewegung der Ballastvorrichtung nicht durch die Formgebung der Stütze verhindert sein. Alternativ kann durch die Formgebung der Stütze auch eine Bewegung der Ballastvorrichtung in andere Richtungen verhindert sein. Eine Bewegung der Ballasthaltevorrichtung nach oben ist im Wesentlichen verhindert, wenn sich die Ballasthaltevorrichtung nicht so weit nach oben bewegen kann, dass sie von der Grundschiene entfernt werden kann, insbesondere durch Windeinwirkung. Ein geringes Spiel in Form einer Bewegung der Ballasthaltevorrichtung relativ zu der Grundschiene, welches eine Positionssicherung der Ballasthaltevorrichtung an der Grundschiene nicht beeinträchtigt, kann hierbei möglich sein.

Eine Formgebung der Stütze kann eine Bewegung der Ballasthaltevorrichtung nach oben ist im Wesentlichen verhindern, indem sich ein Profil der Stütze oberhalb der Ballastvorrichtung vergrößert. Alternativ oder zusätzlich kann die Stütze oberhalb der Ballasthaltevorrichtung nicht gerade nach oben verlaufen. Beispielsweise kann die Stütze zumindest oberhalb der Ballasthaltevorrichtung schräg verlaufen, so dass eine Bewegung der Ballasthaltevorrichtung nach oben ist im Wesentlichen zumindest dann verhindert ist, wenn gleichzeitig eine Bewegung der Ballasthaltevorrichtung nach vorne und / oder hinten in Erstreckungsrichtung der Grundschiene verhindert ist, so dass die Ballasthaltevorrichtung dem Verlauf der Stütze nicht folgen kann.

Die Ballasthaltevorrichtung kann eine Ballastwanne oder Ballastschiene sein, welche eine Vertiefung zur Aufnahme von Ballast sowie einen Auflagerand aufweist, welcher eingerichtet ist, auf der Grundschiene angeordnet zu werden. Die wenigstens eine Öffnung der Ballasthaltevorrichtung kann mit einem Ausschnitt in dem Auflagerand gebildet sein, welcher zu einer seitlichen Kante der Ballasthaltevorrichtung geöffnet ist. Der Ausschnitt kann die Stütze umgreifen. Hierbei können Kanten des Ausschnitts in Erstreckungsrichtung der Grundschiene vorne und hinten an der Stütze anliegen, so dass eine Bewegung der Ballasthaltevorrichtung nach vorne und hinten im Wesentlichen verhindert ist.

Allgemein können von verschiedenen Elementen mehr als die explizit genannte Anzahl vorgesehen sein. Beispielsweise können weitere Aufnahmeöffnungen, weitere Positionen der Sicherungsschiene und / oder über die erste und die zweite Stellung eines ersten Stützenelements hinaus weitere Stellungen vorgesehen sein.

Mit der Offenbarung ist eine Anordnung für eine Vorrichtung zum Stützen von Solarmodulen bereitgestellt, mit einer Grundschiene, einer an der Grundschiene angeordneten Stütze für das Halten eines Endes eines Solarmoduls und einer Ballastvorrichtung für die Aufnahme von Ballast, wobei eine Seite der Ballasthaltevorrichtung auf der Grundschiene angeordnet ist, derart, dass die Ballasthaltevorrichtung auf der Grundschiene zumindest abschnittsweise aufliegt und die Stütze zumindest abschnittsweise in wenigstens einer Öffnung der Ballasthaltevorrichtung angeordnet ist, wobei die Stütze derart geformt ist, dass hierbei eine Bewegung der Ballasthaltevorrichtung nach oben im Wesentlichen verhindert ist. Im Zusammenhang mit einer solchen Vorrichtung gelten die obigen Ausführungen zu der Ballasthaltevorrichtung und deren Anordnung in einer Vorrichtung zum Stützen von Solarmodulen mit einer Sicherungsschiene entsprechend.

Die Solarmodul-Anordnung kann zusätzlich eine dritte Vorrichtung gemäß der Offenbarung, eine vierte Vorrichtung gemäß der Offenbarung und ein weiteres Solarmodul aufweisen. Hierbei kann die dritte Vorrichtung derart hinter der der ersten Vorrichtung angeordnet und ausgerichtet sein, dass eine Längsachse der Grundschiene der ersten Vorrichtung und eine Längsachse der Grundschiene der dritten Vorrichtung im Wesentlichen aufeinander liegen. Die vierte Vorrichtung kann derart hinter der der zweiten Vorrichtung angeordnet und ausgerichtet sein, dass eine Längsachse der Grundschiene der zweiten Vorrichtung und eine Längsachse der Grundschiene der vierten Vorrichtung im Wesentlichen aufeinander liegen. Die dritte Vorrichtung und die vierte Vorrichtung können zueinander derart angeordnet und ausgerichtet sein, dass die Stütze der dritten Vorrichtung der Stütze der vierten Vorrichtung direkt gegenüber angeordnet ist. Das weitere Solarmodul kann mit einer ersten Seite auf der dritten Vorrichtung angeordnet sein, wobei ein Ende des weiteren Solarmoduls im Bereich der ersten Seite von der Stütze der dritten Vorrichtung gehalten wird, und mit einer der ersten Seite gegenüberliegenden zweiten Seite auf der vierten Vorrichtung angeordnet sein, wobei das Ende des weiteren Solarmoduls im Bereich der zweiten Seite von der Stütze der vierten Vorrichtung gehalten wird. Hierbei kann die Sicherungsschiene der ersten Vorrichtung mit einem ersten Ende der Sicherungsschiene der ersten Vorrichtung die Grundschiene der ersten Vorrichtung zumindest teilweise umgreifend in der zweiten Position angeordnet sein und mit einem dem ersten Ende gegenüberliegenden zweiten Ende der Sicherungsschiene der ersten Vorrichtung die Grundschiene der dritten Vorrichtung zumindest teilweise umgreifend auf dieser angeordnet sein. Die Sicherungsschiene der zweiten Vorrichtung kann mit einem ersten Ende der Sicherungsschiene der zweiten Vorrichtung die Grundschiene der zweiten Vorrichtung zumindest teilweise umgreifend in der zweiten Position angeordnet sein und mit einem dem ersten Ende gegenüberliegenden zweiten Ende der Sicherungsschiene der zweiten Vorrichtung die Grundschiene der vierten Vorrichtung zumindest teilweise umgreifend auf dieser angeordnet sein. Eine Anordnung von Komponenten hintereinander ist gemäß des Längsverlaufs der Grundschiene bzw der Grundschienen definiert, wobei ein vorderes Ende einer Grundschiene ein einem hinteren Ende entlang des Verlaufs der Grundschiene entgegengesetztes Ende ist.

In alternativen Ausgestaltungen können die dritte Vorrichtung und die vierte Vorrichtung modifizierte Vorrichtungen sein bei denen das weitere Solarmodul mit einer ersten Seite auf der dritten Vorrichtung angeordnet ist, wobei ein Ende des weiteren Solarmoduls im Bereich der ersten Seite - wie das Solarmodul - von der Stütze der ersten Vorrichtung gehalten wird, und mit einer der ersten Seite gegenüberliegenden zweiten Seite auf der vierten Vorrichtung angeordnet sein, wobei das Ende des weiteren Solarmoduls im Bereich der zweiten Seite - wie das Solarmodul - von der Stütze der zweiten Vorrichtung gehalten wird. Hierbei kann die Sicherungsschiene der ersten Vorrichtung mit einem ersten Ende der Sicherungsschiene der ersten Vorrichtung die Grundschiene der ersten Vorrichtung zumindest teilweise umgreifend in der zweiten Position angeordnet sein und mit einem dem ersten Ende gegenüberliegenden zweiten Ende der Sicherungsschiene der ersten Vorrichtung die Grundschiene der dritten Vorrichtung zumindest teilweise umgreifend auf dieser angeordnet sein. Die Sicherungsschiene der zweiten Vorrichtung kann mit einem ersten Ende der Sicherungsschiene der zweiten Vorrichtung die Grundschiene der zweiten Vorrichtung zumindest teilweise umgreifend in der zweiten Position angeordnet sein und mit einem dem ersten Ende gegenüberliegenden zweiten Ende der Sicherungsschiene der zweiten Vorrichtung die Grundschiene der vierten Vorrichtung zumindest teilweise umgreifend auf dieser angeordnet sein. Hierbei können die dritte und die vierte Vorrichtung jeweils eine Stütze aufweisen, auf welcher zusätzliche Solarmodule entsprechend angeordnet sein können.

Die Solarmodul-Anordnung kann eine oder mehrere weitere Stützvorrichtungen aufweisen, welche beispielsweise mit zu den Grundschienen einer oder mehrerer der genannten Stützvorrichtungen parallel ausgerichteter Grundschiene zwischen entsprechenden Stützvorrichtungen angeordnet sind und das Solarmodul mittig stützen. Weiterhin kann die Solarmodul-Anordnung eine beliebige Anzahl zusätzlicher Stützvorrichtungen aufweisen.

Allgemein können zwei Solarmodule in einer Solarmodul-Anordnung gemäß der Offenbarung nebeneinander angeordnet sein, wobei ein Solarmodul mit einer ersten Seite auf einer Stützvorrichtung, insbesondere einer Vorrichtung zum Stützen von Solarmodulen gemäß der Offenbarung, angeordnet ist und ein weiteres Solarmodul mit einer zweiten Seite auf derselben Stützvorrichtung angeordnet ist. Hierbei kann die jeweils andere Seite der Solarmodule auf einer jeweiligen weiteren Stützvorrichtung angeordnet sein, welche ein seitliches Ende der Solarmodul-Anordnung bilden können oder auf welchen wiederum eine jeweilige Seite weiterer Solarmodule angeordnet sein kann.

Zwei Solarmodule können in einer Solarmodul-Anordnung hintereinander angeordnet sein, wobei eine Neigung der Solarmodule in dieselbe oder in entgegengesetzte Richtungen abfallend sein kann. Bei einer gleich ausgerichteten Neigung kann ein jeweiliges oberes Ende der Solarmodule von einer jeweiligen oberen Stütze gehalten werden. Bei einer entgegengesetzten Neigung der Solarmodule kann ein jeweiliges oberes Ende beider Solarmodule von derselben oberen Stütze gehalten werden.

In einer Solarmodul-Anordnung kann eine Anordnung von Solarmodulen sowohl nebeneinander als auch hintereinander vorgesehen sein, wobei die oben dargelegten Ausführungen solcher Anordnungen entsprechend vorgesehen sein können. Bei einer Anordnung von zwei Solarmodulen nebeneinander und zwei weiterer Solarmodule hintereinander mit entgegengesetzter Neigung kann können die vier Solarmodule insbesondere in einem jeweiligen Eckbereich von derselben oberen Stütze gehalten werden.

Eine Stützvorrichtung der Solarmodul-Anordnung, insbesondere eine Vorrichtung zum Stützen von Solarmodulen gemäß der Offenbarung, kann eingerichtet sein, ein jeweiliges oberes Ende von bis zu vier Solarmodulen im Bereich einer Seite zu halten. Hierzu kann die Stütze der Stützvorrichtung eines oder mehrere Anschlagelemente aufweisen, an welche Solarmodule, insbesondere Rahmenprofile von Solarmodulen, für eine Montage an der Stützvorrichtung angelegt werden können. Insbesondere kann mit dem einen oder den mehreren Anschlagelementen ein jeweiliger Anschlag für eine jeweilige Oberkante und / oder für eine jeweilige Seitenkanten von vier Solarmodulen gebildet sein. Alternativ oder zusätzlich kann die obere Stütze der Stützvorrichtung Befestigungselemente, beispielsweise Klemmelemente und / oder Schraubelemente, für eine jeweilige Befestigung eines jeweiligen oberen Endes von bis zu vier Solarmodulen aufweisen.

Bei dem Bausatz, dem Verfahren zum Herstellen einer Vorrichtung zum Stützen von Solarmodulen und / oder der Solarmodul-Anordnung können die im Zusammenhang mit der Vorrichtung zum Stützen von Solarmodulen beschriebenen Ausgestaltungen entsprechend vorgesehen sein und umgekehrt.

Insbesondere kann bei der Solarmodul-Anordnung eine Ballasthaltevorrichtung vorgesehen sein, welche mit einer ersten Seite auf der ersten Vorrichtung angeordnet ist und mit einer der ersten Seite gegenüberliegenden zweiten Seite auf der zweiten Vorrichtung angeordnet ist, wobei die im Zusammenhang mit der Vorrichtung beschriebenen Ausgestaltungen im Zusammenhang mit der Ballasthaltevorrichtung entsprechend für die erste Vorrichtung und die zweite Vorrichtung betreffend jeweils eine Seite der Ballasthaltevorrichtung vorgesehen sein können. Alternativ oder zusätzlich kann vorgesehen sein, dass wenigstens eine der Grundschiene der ersten Vorrichtung und der Grundschiene der zweiten Vorrichtung entsprechend den beschriebenen Ausgestaltungen eingerichtet ist, eines oder mehrere Kabel eines Solarmoduls aufzunehmen und zu führen.

Die Stützvorrichtung kann alternativ oder ergänzend zu den beschriebenen Ausführungsbeispielen in einer Ausgestaltung im Bereich der Grundschiene und der Sicherungsschiene mit einem Wasserablaufsystem gebildet sein. Hierzu können im Bodenbereich der Grundschiene Ablaufrillen vorgesehen sein, die sich in Längsrichtung der Grundschiene erstrecken und dazu dienen, Wasser abzuleiten, insbesondere Regenwasser. Sind in die Grundschiene Kabel eingelegt, so ist hierdurch vermieden, dass die Kabel im Wasser liegen. Das so über die Ablaufrillen von der Grundschiene ablaufende oder abgeführte Wasser kann dann auf die darunterliegende Sicherungsschiene gelangen und dort entlang von Vertiefungen, die an der Sicherungsschiene im Bodenbereich gebildet sind, nach außen abgeführt werden. Mittels der Vertiefungen und dem darüber angeordneten Boden der Sicherungsschiene sind Ablaufkanäle gebildet.

In einer weiteren Ausführungsform kann alternativ oder ergänzend zu den beschriebenen Ausführungsbeispielen vorgesehen sein, dass die untere Stütze mit einem an der Grundschiene schwenkbar gelagerten Stützbauteil gebildet ist. Das Stütz- oder Haltebauteil stellt zum Auflegen des Solarmoduls eine Auflagefläche bereit, wobei nebeneinander gebildeten Auflageflächen ein Distanzzapfen angeordnet sein kann, mit dem ein Anschlag für die beidseitig anzuordnenden Solarmodule gebildet ist. Das Haltebauteil ist um eine Schwenkachse schwenkbar an der Grundschiene gelagert, die sich quer zur Längsrichtung der Grundschiene erstreckt. Haltekrallen können die Grundschiene auf gegenüberliegenden Seiten und beabstandet zur Grundschiene umgreifen, so dass in den Abstandsbereich zwischen Grundschiene und Haltekralle die Scherungsschiene geschoben werden kann. Wird das Haltebauteil um die Schwenkachse geschwenkt, können die Haltekrallen vom Eingriff gelöst werden (mittels Schwenken nach oben). Die schwenkbare Lagerung des Haltebauteils ermöglicht so eine stufenlose Anpassung an unterschiedliche Neigungswinkel des Solarmoduls.

### Beschreibung von Ausführungsbeispielen

Im Folgenden werden weitere Ausführungsbeispiele unter Bezugnahme auf Figuren einer Zeichnung näher erläutert. Hierbei zeigen:
- Fig. 1: eine Vorrichtung zum Stützen von Solarmodulen in einer ungesicherten Konfiguration;
- Fig. 2: eine weitere Vorrichtung zum Stützen von Solarmodulen in einer gesicherten Konfiguration;
- Fig. 3: noch eine weitere Vorrichtung zum Stützen von Solarmodulen in einer Transportkonfiguration;
- Fig. 4A: eine Vorrichtung zum Stützen von Solarmodulen mit einer niedrigen oberen Stütze;
- Fig. 4B: eine weitere Vorrichtung zum Stützen von Solarmodulen mit einer hohen oberen Stütze;
- Fig. 5: eine Solarmodul-Anordnung in einer einseitigen 10-Grad-Konfiguration;
- Fig. 6: eine weitere Solarmodul-Anordnung in einer einseitigen 15-Grad-Konfiguration;
- Fig. 7: noch eine weitere Solarmodul-Anordnung in einer zweiseitigen 10-Grad-Konfiguration;
- Fig. 8A: eine Detailansicht einer Solarmodul-Anordnung;

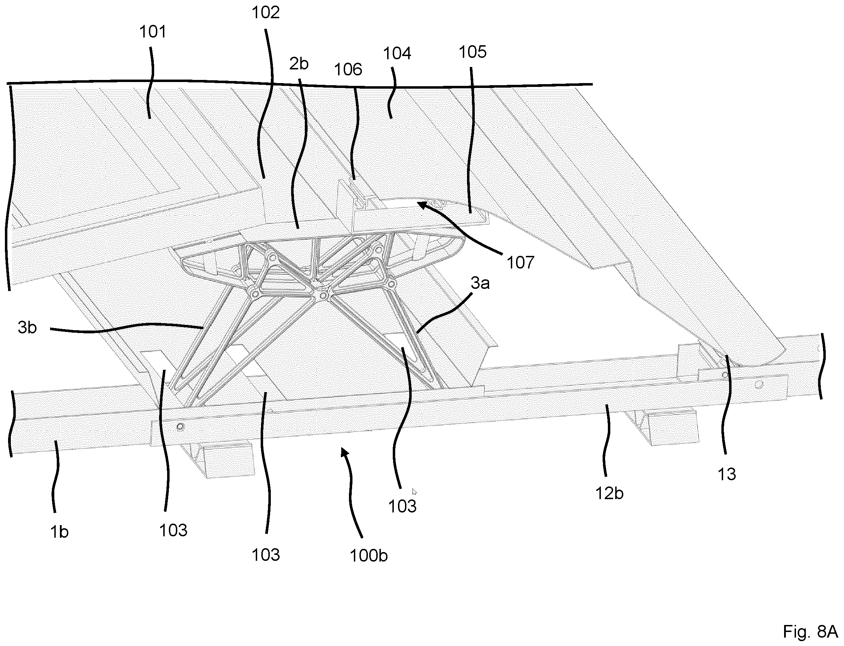

- Fig. 8A: eine Detailansicht einer weiteren Solarmodul-Anordnung;

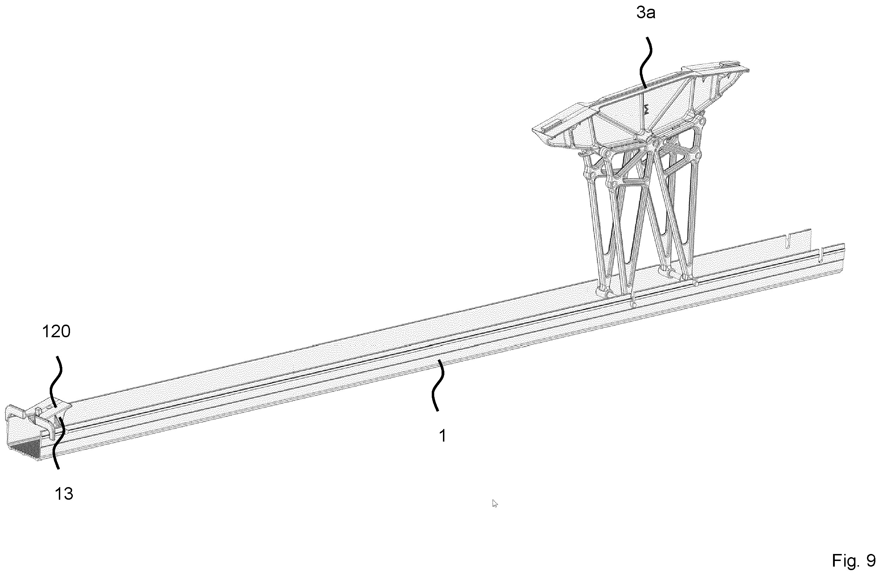

- Fig. 9: eine schematische Darstellung einer Anordnung für eine Vorrichtung zum Stützen eines Solarmoduls mit der Grundschiene;

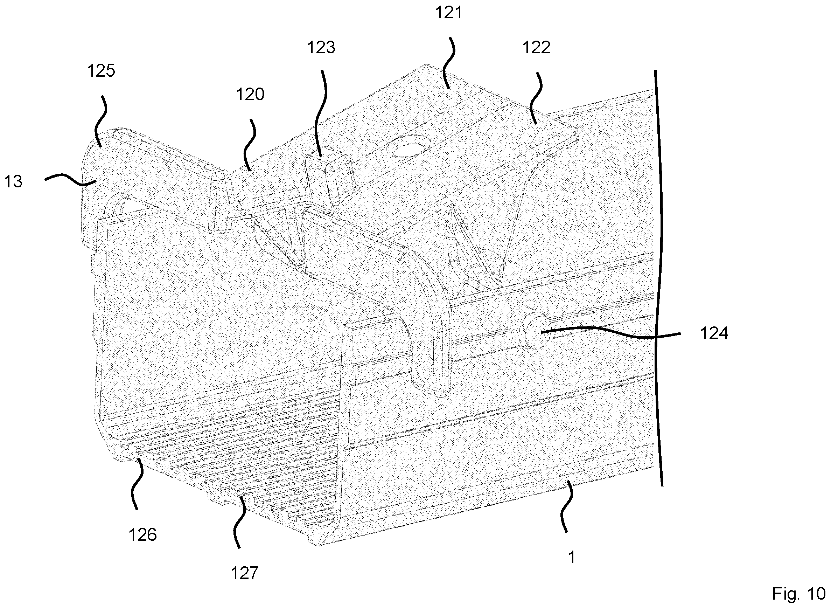

- Fig. 10: eine schematische Darstellung eines Abschnitts der Anordnung aus Fig. 9 mit einem Stütz- oder Haltbauteil;

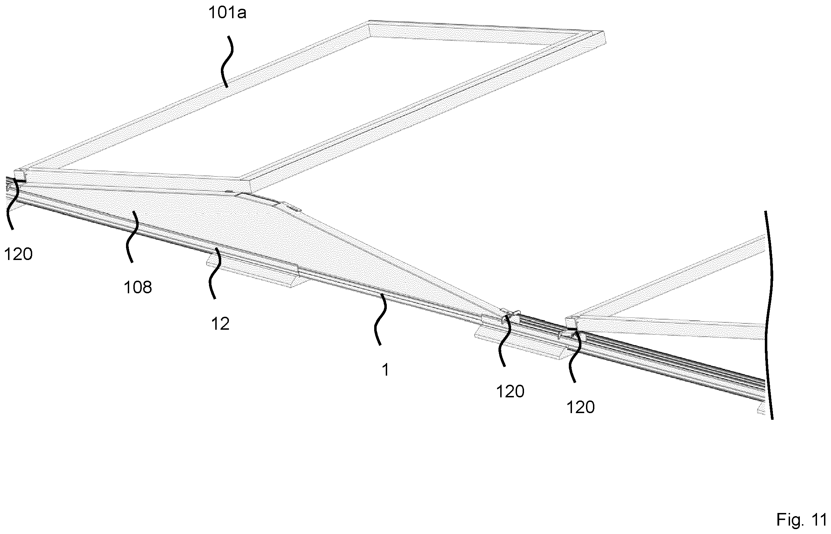

- Fig. 11: eine schematische Darstellung einer Anordnung für eine Vorrichtung zum Stützen eines Solarmoduls mit einem seitlichen Winddeflektor;

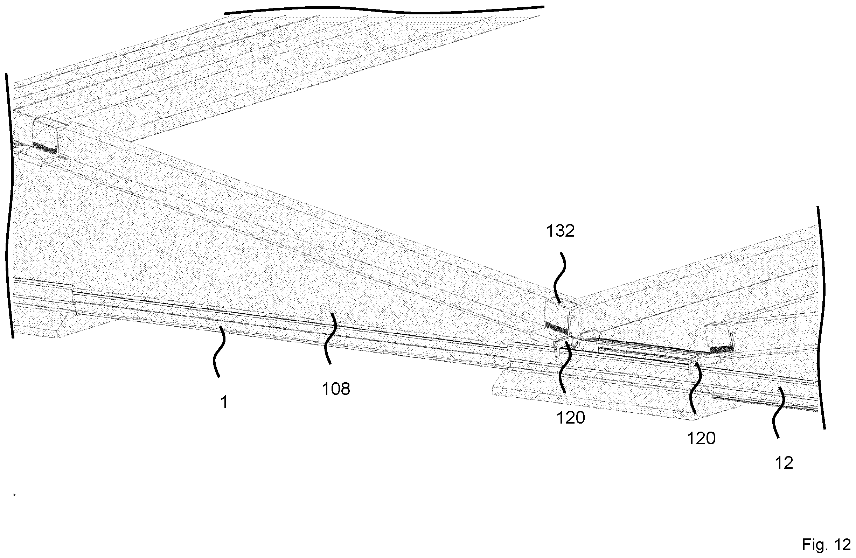

- Fig. 12: eine schematische Darstellung eines Abschnitts der Anordnung aus Fig. 11;

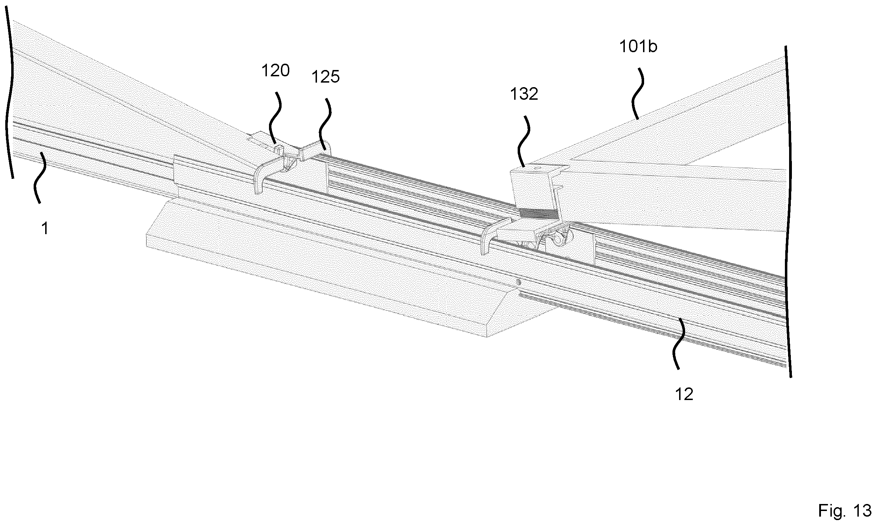

- Fig. 13: eine vergrößerte schematische Darstellung des Abschnitts der Anordnung aus Fig. 12;

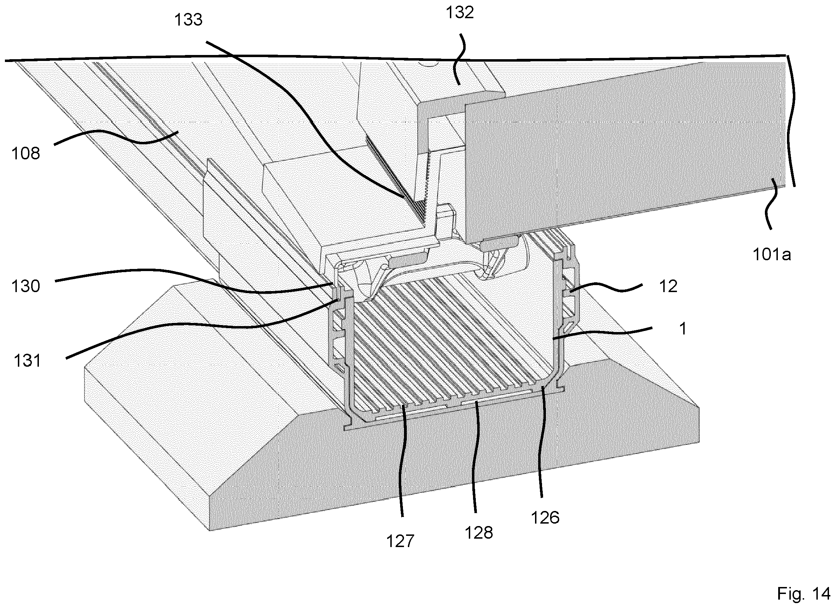

- Fig. 14: eine vergrößerte schematische Darstellung des Abschnitts der Anordnung aus Fig. 13 mit einem Stütz- oder Haltebauteil und

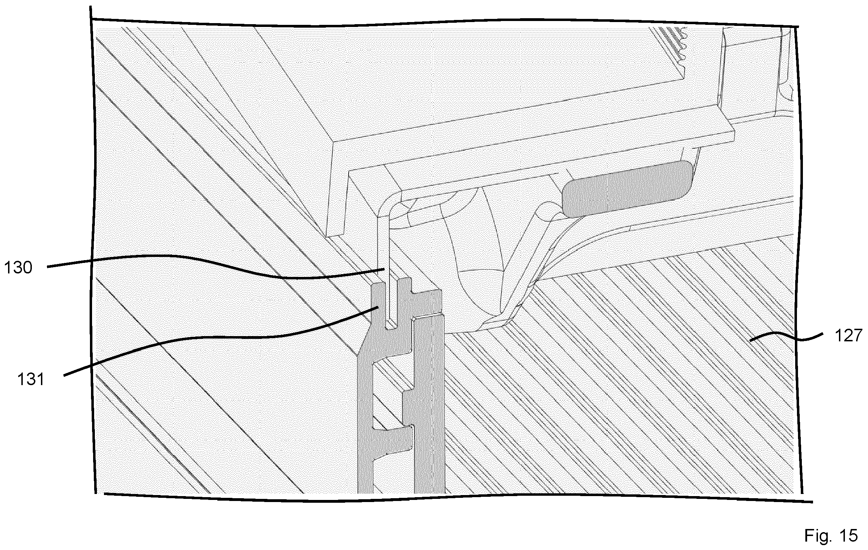

- Fig. 15: eine vergrößerte schematische Darstellung des Abschnitts der Anordnung aus Fig. 14.

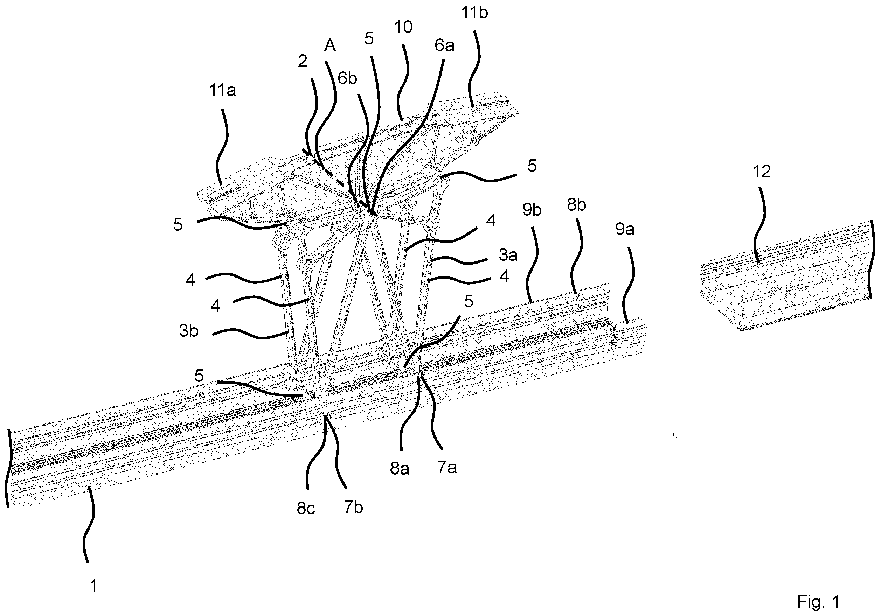

Die Fig. 1 zeigt eine Vorrichtung zum Stützen von Solarmodulen. Die Vorrichtung ist mit einer Grundschiene 1 gebildet. An der Grundschiene 1 ist eine obere Stütze 2 angeordnet, welche dem Halten eines oberen Endes eines Solarmoduls auf einer Seite des Solarmoduls dient.

Die obere Stütze 2 ist höhenverstellbar. Hierzu ist die Stütze mit zwei Stützenelementen 3a, 3b gebildet. In dem Ausführungsbeispiel der Fig. 1 ist jedes der Stützenelemente 3a, 3b mit zwei Metallguss-Teilen 4 gebildet, welche durch zylindrische Stiften 5 miteinander verbunden sind. In der gezeigten Ausführung sind die vier Metallguss-Teile 4 baugleich.

Die Stützenelemente 3a, 3b sind an zwei Gelenkpunkten 6a, 6b, welche auf einer Gelenkachse A liegen, mittels eines zylindrischen Stifts 5 miteinander verbunden, wobei eine Rotation um die Gelenkachse A ermöglicht ist. Hierdurch sind die Stützenelemente 3a, 3b zueinander schwenkbar. An einem jeweiligen unteren Ende der Stützenelemente 3a, 3b sind die zylindrischen Stifte 5 mit jeweils zwei Verbindungselementen 7a, 7b gebildet, welche seitlich aus den Stützenelementen 3a, 3b herausragen.

Die Verbindungselemente 7a, 7b können in Aufnahmeöffnungen 8a, 8b, 8c der Grundschiene 1 angeordnet werden. Hierbei sind eine erste Aufnahmeöffnung 8a und eine zweite Aufnahmeöffnung 8b der Grundschiene jeweils als eine die Grundschiene 1 auf ihrer gesamten Breite durchsetzende zu einer Oberseite der Grundschiene geöffnete Aussparung gebildet, welche in gegenüberliegenden Seitenwänden 9a, 9b der Grundschiene 1 jeweils eine Langloch-Form bilden. Die Verbindungselemente 7a eines ersten Stützenelements 3a können von oben in die erste Aufnahmeöffnung 8a oder die zweite Aufnahmeöffnung 8b eingesetzt werden. Hierdurch ist die jeweilige Position des unteren Endes des ersten Stützenelements 3a entlang des Verlaufs der Grundschiene 3 festgelegt. In der Vorrichtung gemäß der Fig. 1 sind die ersten Verbindungselemente 7a in der ersten Aufnahmeöffnung 8a angeordnet.

Eine weitere Aufnahmeöffnung 8c der Grundschiene 1 ist als eine die gesamte Breite der Grundschiene 1 durchsetzende Aussparung mit kreisförmigem Querschnitt gebildet, welche in den gegenüberliegenden Seitenwänden 9a, 9b der Grundschiene 1 Kreisbohrungen bildet. Die Verbindungselemente 7b eines zweiten Stützenelements 3b sind in der weiteren Aufnahmeöffnung 8c drehbar angeordnet. In der gezeigten Ausführung sind die Verbindungselemente 7b des zweiten Stützenelements 3b als in dem betreffenden zylindrischen Stift 5 angeordnete und aus diesem hervorragende Stiftenden ausgebildet, welche in die weiteren Aufnahmeöffnung 8c eingreifen und das untere Ende des zweiten Stützenelements 3b entlang der Erstreckungsrichtung der Grundschiene 1 ortsfest fixieren.

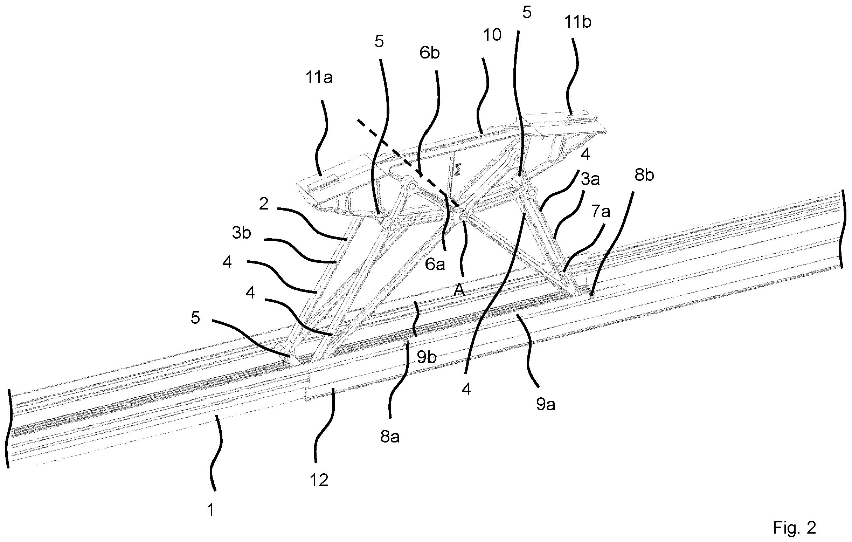

Die Fig. 2 zeigt eine Vorrichtung zum Stützen von Solarmodulen, in der im Vergleich zu der Ausgestaltung der Fig. 1 die Verbindungselemente 7a des ersten Stützenelements 3a in der zweiten Aufnahmeöffnung 8b der Grundschiene 1 angeordnet sind. Hierdurch sind das erste Stützenelement 3a und das zweite Stützenelement 3b gegenüber der in der Fig. 1 gezeigten Konfiguration zueinander verschwenkt und ein Abstand zwischen den unteren Enden des ersten Stützenelements 3a und des zweiten Stützenelements 3b, welcher durch den Abstand der ersten Verbindungselemente 7a zu den zweiten Verbindungselementen 7b bestimmt ist, ist vergrößert. Somit ist die Höhe des jeweiligen Dreiecks über der Grundschiene 1 verringert, welches durch die ersten Verbindungselemente 7a, die zweiten Verbindungselemente 7b sowie die Gelenkpunkte 6a, 6b gebildet wird. Es ergibt sich eine geringere Gesamthöhe der oberen Stütze der Ausgestaltung der Fig. 2 im Vergleich zu der oberen Stütze der in der Fig. 1 gezeigten Ausgestaltung. Zudem verschiebt sich ein Auflagepunkt für ein Solarmodul relativ zu der Grundschiene 1. Hierdurch ergibt sich für ein Solarmodul, dessen oberes Ende an der jeweiligen obere Stütze 2 gehalten wird und dessen unteres Ende sich auf der Höhe der jeweiligen Grundschiene 1 befindet, zwischen den Konfigurationen der Fig. 1 und 2 ein unterschiedlicher Winkel gegenüber der Horizontalen.

Im Vergleich der Darstellungen der Fig. 1 und 2 ist erkennbar, dass je nach Anordnung der ersten Verbindungselemente 7a in der ersten 8a oder zweiten 8b Aufnahmeöffnung die entlang des Verlaufs der Grundschiene 1 vor und hinter den Gelenkpunkten 6a, 6b angeordneten zylindrischen Stifte 5 mit unterschiedlichen Öffnungen der Metallguss-Teile 4 des ersten 3a und zweiten 3b Stützenelements in Kontakt treten. Hierbei sind zur zusätzlichen Stabilisierung der oberen Stütze 2 die betreffenden Stifte 5 in den entsprechenden Öffnungen gesichert.

Die obere Stütze 2 weist eine Haltevorrichtung 10 auf, welche zum Halten eines jeweiligen Solarmoduls zwei Auflageflächen 11a, 11b aufweist, auf welche jeweils ein oder mehrere Solarmodule aufgelegt und fixiert werden können. Die Auflageflächen 11a, 11b sind unter einem Winkel zu einem mittleren Abschnitt der Haltevorrichtung 10 angeordnet, um ein Solarmodul unter einem Winkel zur Horizontalen zu stützen. Auf den Auflageflächen 11a, 11b sind jeweils Anschläge gebildet, an welchen auf der Haltevorrichtung 10 anzuordnende Solarmodule seitlich angelegt werden können um diese auszurichten, insbesondere mit einer Rahmenkonstruktion der Solarmodule. Es ist somit erkennbar, dass in der dargestellten Ausführung die Haltevorrichtung 10 für das Halten von vier Solarmodulen eingerichtet ist, nämlich jeweils zwei seitlich nebeneinander angeordnete Solarmodule auf jeder der Auflageflächen 11a, 11b.

Wie im Vergleich der Fig. 1 und 2 zu erkennen ist, weisen die erste Aufnahmeöffnung 8a und die zweite Aufnahmeöffnungen 8b unterschiedliche Tiefen von der Oberseite der Grundschiene 1 auf. Hierdurch sind die ersten Verbindungselemente 7a und die zweiten Verbindungselemente 7b auf derselben Höhe angeordnet, wenn die ersten Verbindungselemente 7a in der zweiten Aufnahmeöffnung 8b angeordnet sind, wie in der Fig. 2 gezeigt. Sind die ersten Verbindungselemente 7a in der ersten Aufnahmeöffnung 8a angeordnet, liegen die ersten Verbindungselemente 7a höher als die zweiten Verbindungselemente 7b. Hierdurch ist in der Konfiguration gemäß der Fig. 1 die Haltevorrichtung gegenüber einer horizontalen Ausrichtung des mittleren Abschnitts, welche sich in der Konfiguration gemäß der Fig. 2 einstellt, abgewinkelt. Hiermit ist ein unterschiedlicher Winkel gegenüber der Horizontalen der Auflagefläche 11a in den unterschiedlichen Konfigurationen erreicht. In der beispielhaften Konfiguration der Fig. 1 beträgt ein Winkel der Auflagefläche 11a gegenüber der Horizontalen, und somit der Winkel gegenüber der Horizontalen, in dem ein Solarmodul auf der Auflagefläche 11a flächig angeordnet wird, 15 Grad. Gemäß dem Ausführungsbeispiel der Fig. 2 beträgt der Winkel der Auflagefläche 11a gegenüber der Horizontalen, und somit der Auflagewinkel eines Solarmoduls, 10 Grad.

Der auf der Gelenkachse A angeordnete zylindrische Stift 5 sowie die entlang des Verlaufs der Grundschiene 1 vor und hinter den Gelenkpunkten 6a, 6b angeordneten zylindrischen Stifte 5 sind in hierfür eingerichteten Öffnungen der Haltevorrichtung 10 angeordnet. Hierdurch kann mit einer Sicherung der entlang des Verlaufs der Grundschiene 1 vor und hinter den Gelenkpunkten 6a, 6b angeordneten zylindrischen Stifte 5 in den entsprechenden Öffnungen der Metallguss-Teile 4 in den verschiedenen Stellungen der Stützenelemente 3a, 3b auch eine Sicherung der Position und Ausrichtung der Haltevorrichtung 10 erreicht sein.

Bei der gezeigten Ausgestaltung ist sind die zweiten Verbindungselemente 7b im Auslieferzustand der Vorrichtung in der weiteren Aufnahmeöffnung 8c ortsfest fixiert vormontiert. Um die Vorrichtung für das Stützen eines Solarmoduls herzurichten, werden die ersten Verbindungselemente 7a in der ersten 8a oder der zweiten 8b Aufnahmeöffnung angeordnet. In der gezeigten Ausführung erfolgt eine Sicherung der vor und hinter den Gelenkpunkten 6a, 6b angeordneten zylindrischen Stifte 5 in den entsprechenden Öffnungen der Metallguss-Teile 4 erst nach der Anordnung der ersten Verbindungselemente 7a in der ersten 8a oder der zweiten 8b Aufnahmeöffnung, da beim Anordnen der ersten Verbindungselemente 7a in der ersten 8a oder der zweiten 8b Aufnahmeöffnung die Stützenelemente 3a, 3b zueinander beweglich sein müssen.

In der Fig. 1 ist entlang des Verlaufs der Grundschiene 1 hinter der Grundschiene 1 eine Sicherungsschiene 12 gezeigt. Die Sicherungsschiene 12 ist mit einer Verbindungsschiene gebildet, welche zur Verbindung mehrerer Anordnungen hintereinander eingerichtet ist. Die Sicherungsschiene 12 ist mit einem Profil gebildet, welches an die äußere Form der Grundschiene 1 derart angepasst ist, dass die Sicherungsschiene 12 die Grundschiene 1 von unten umgreift, wobei sie die Seitenwände 9a, 9b der Grundschiene 1 teilweise bedeckt. Hierzu wird die Sicherungsschiene 12 auf die Grundschiene 1 aufgeschoben. Dies ist in der Fig. 2 gezeigt.

Beim Aufschieben auf die Grundschiene 1 überdeckt und verschließt die Sicherungsschiene 12 die erste 8a und zweite 8b Aufnahmeöffnungen teilweise. Hierbei ist eine erste Position (nicht dargestellt) der Sicherungsschiene 12 definiert, in welcher die Sicherungsschiene teilweise auf die Grundschiene 1 aufgeschoben ist, die erste 8a und zweite 8b Aufnahmeöffnung noch nicht überdeckt und verschließt. In einer in der Fig. 2 gezeigten zweiten Position der Sicherungsschiene 12 ist diese so weit auf die Grundschiene 1 aufgeschoben, dass sie die erste 8a und die zweite 8b Aufnahmeöffnung teilweise überdeckt und verschließt. Hierdurch sind die ersten Verbindungselemente 7a daran gehindert, sich aus der Aufnahmeöffnung 8a, 8b, in welcher sie angeordnet sind (in der Ausführung der Fig. 2 also aus der zweiten Aufnahmeöffnung 8b) herauszubewegen. Hierdurch ist eine Sicherung der oberen Stütze, insbesondere des erste Stützenelements 3a, in einer gewünschten Position erreicht.

An der Innenseite der Sicherungsschiene 12 sind jeweilige Vorsprünge gebildet, so dass die Sicherungsschiene 12 die Verbindungselemente 7a sowohl in der höheren Anordnung in der ersten Aufnahmeöffnung 8a als auch in der tieferen Anordnung in der zweiten Aufnahmeöffnung 8b umgreifen und sichern kann.

Die Sicherungsschiene 12 kann in der zweiten Position verriegelt werden. Beispielsweise können Rastelemente zwischen der Grundschiene 1 und der Sicherungsschiene 12 vorgesehen sein, an welchen die Sicherungsschiene 12 rastend in der zweiten Position gesichert wird. Beispielsweise können die ersten 7a und / oder die zweiten 7b Verbindungselemente mit federnden Stiftelementen gebildet sein, welche zur Sicherung in entsprechende Aussparungen auf der Innenseite der Sicherungsschiene 12 eingreifen. Alternativ kann die Sicherungsschiene 12 beispielsweise mittels einzusetzenden Stiften, Schrauben, Kleben oder Schweißen an der Grundschiene 1 in der zweiten Position gesichert werden.

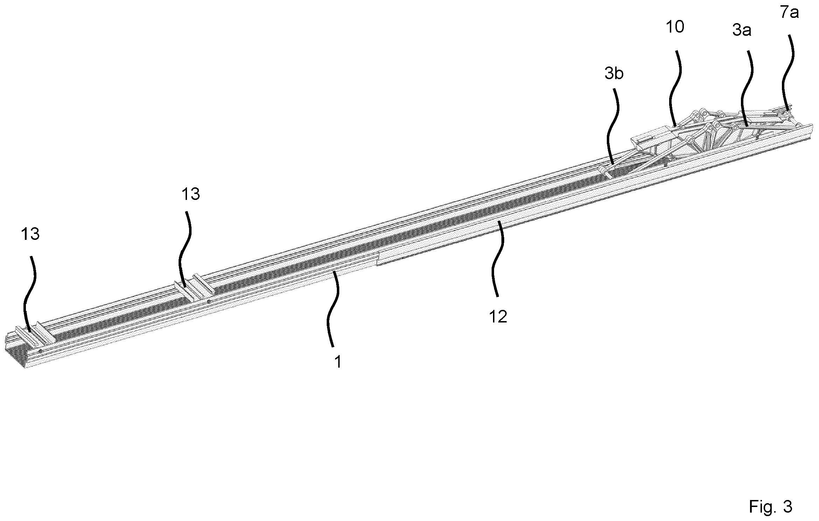

Die Fig. 3 zeigt eine Anordnung für ein Haltesystem für Solarmodule in einer Transportkonfiguration. Hierbei sind die ersten Verbindungselemente 7a vollständig nach hinten bewegt, wodurch das erste Stützenelement 3a zu dem zweiten Stützenelement 3b derart angeordnet ist, dass die obere Stütze 2 vollständig kollabiert ist. Hierbei sind die Stützenelemente 3a, 3b im Wesentlichen innerhalb der Grundschiene 1 angeordnet. Die Stützenelemente 3a, 3b sowie die Haltevorrichtung 10 ragen zwar noch nach oben über das Profil der Grundschiene hinaus. Dennoch ist ein deutlich kompakterer Aufbau erreicht, wodurch ein Transport der Anordnung in der Transportkonfiguration erleichtert sein kann. Die die Sicherungsschiene 12 bildende Verbindungsschiene ist in der Transportkonfiguration nahezu vollständig über der Grundschiene 1 angeordnet. Hierbei sind die ersten Verbindungselemente 7a außerhalb, nämlich hinter, der Grundschiene 1 angeordnet und werden von einem über die Grundschiene 1 überstehenden Abschnitt der Sicherungsschiene 12 umgriffen. Hierdurch sind die Verbindungselemente 7a und somit die obere Stütze 2 in der Transportkonfiguration gesichert. An der Grundschiene 1 sind zusätzlich untere Stützen 13 angeordnet, welche jeweils für das Halten eines unteren Endes eines Solarmoduls eingerichtet sind.

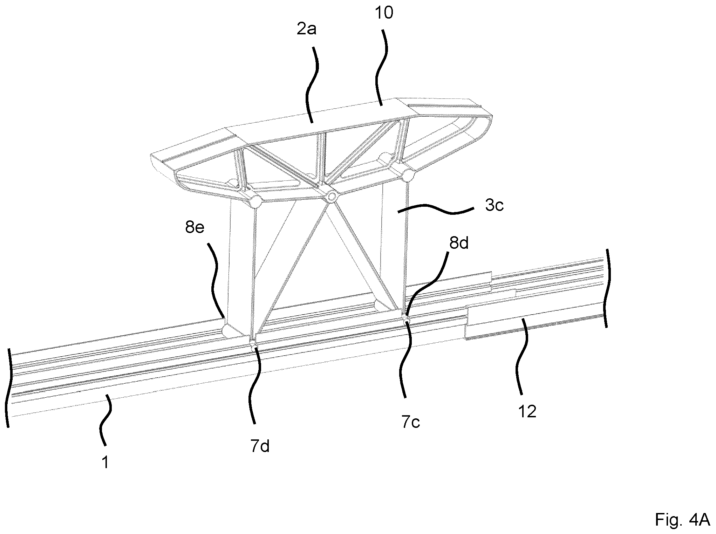

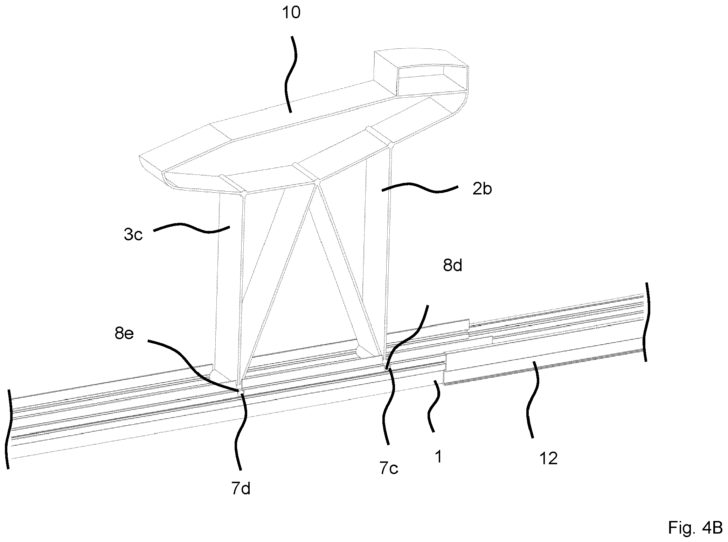

Die Fig. 4A und 4B zeigen Vorrichtungen zum Stützen von Solarmodulen, bei denen eine Sicherungsschiene 12 für die Sicherung von oberen Stützen zum Einsatz kommt, welche nicht höhenverstellbar sind. Gemäß der Darstellung der Fig. 4A ist eine obere Stütze 2a mit einer ersten Höhe an einer Grundschiene 1 angeordnet. Hierfür weist die Grundschiene 1 zwei Aufnahmeöffnungen 8d, 8e auf. Die obere Stütze 2a ist mit einer Stützenstruktur 3c gebildet welche an ihrem unteren Ende entlang der Erstreckungsrichtung der Grundschiene 1 vorne und hinten Verbindungselemente 7c, 7d aufweist. Welche in den Aufnahmeöffnungen 8d, 8e angeordnet sind. Hierzu sind Aufnahmeöffnungen 8d, 8e der Grundschiene 1 nach oben geöffnet. Eine Sicherungsschiene 12 kann auf die Grundschiene 1 aufgeschoben werden, so dass sie die Aufnahmeöffnungen 8d, 8e teilweise überdeckt und verschließt und so die Verbindungselemente 7c, 7d und folglich die obere Stütze 2a - analog zu den Ausführungen mit Bezug zu den Ausführungen der Fig. 1 und 2 - sichert. Im Vergleich zu der Fig. 4A ist in der Ausführung gemäß der Fig. 4B eine obere Stütze 2b an der Grundschiene 1 angeordnet, welche höher ist als die obere Stütze 2a gemäß der Ausführung der Fig. 4A.

Mit der Sicherungsscheine 12 kann somit bei der Montage der jeweiligen Vorrichtung gemäß den Fig. 4A und 4B die jeweilige obere Stütze 2a, 2b an der Grundschiene 1 gesichert werden, in dem die Sicherungsschiene 12 in die zweite Position bewegt wird. Zudem ist ein Austausch von oberen Stützen ermöglicht, indem die Sicherungsschiene 12 in die erste Position bewegt wird, die an der Grundschiene 1 angeordnete obere Stütze entfernt, die gewünschte obere Stütze an der Grundschiene 1 angeordnet und die Sicherungsschiene 12 in die zweite Position bewegt wird.

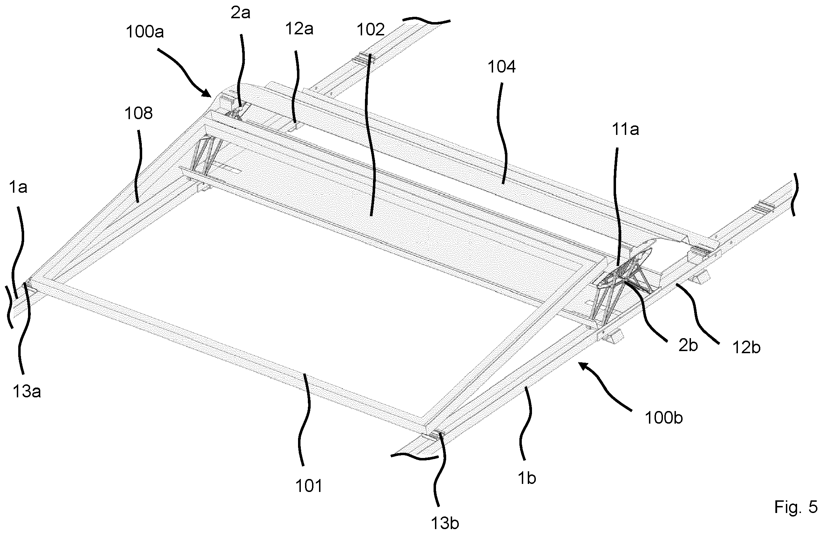

Die Fig. 5 zeigt eine Solarmodul-Anordnung. Die Solarmodul-Anordnung umfasst zwei Vorrichtungen 100a, 100b, die jeweils eine Grundschiene 1a, 1b, eine obere Stütze 2a, 2b, eine untere Stütze 13a, 13b sowie eine als Sicherungsschiene 12a, 12b dienende Verbindungsschiene für das Verbinden der Grundschienen 1a, 1b mit weiteren Grundschienen für die Erweiterung des Haltesystems umfassen.

Die Grundschienen 1a, 1b der Vorrichtungen 100a, 100b sind parallel ausgerichtet und die oberen Stützen 2a, 2b sowie die unteren Stützen 13a, 13b sind jeweils zueinander auf gleicher Höhe entlang den Grundschienen 1a, 1b angeordnet. Ein Solarmodul 101, welches zur besseren Übersicht in der Fig. 5 nur als Rahmen dargestellt ist, liegt an einem oberen Ende auf gegenüberliegenden Seiten auf den Auflageflächen 11a der oberen Stützen 2a, 2b auf und ist von diesen gehalten. An einem unteren Ende liegt das Solarmodul 101 mit den gegenüberliegenden Seiten jeweils auf den unteren Stützen 13a, 13b auf und wird von diesen gehalten. Das Solarmodul 101 ist mittels der Solarmodul-Anordnung also an vier Auflagepunkten gehalten, wobei die Auflagerung im Gegensatz zu einer streckenförmigen Halterung an dem Rahmen des Solarmoduls 101 als punktförmig verstanden werden kann. Es ist somit mit dem in der Fig. 5 gezeigten Haltesystem eine Vier-Punkt-Halterung des Solarmoduls 101 bereitgestellt.

Die oberen Stützen 2a, 2b der Vorrichtungen 100a, 100b sind jeweils mit den ersten Verbindungselementen 7a in den zweiten Aufnahmeöffnungen 8b angeordnet, so dass die oberen Stützen 2a, 2b, dieselbe Höhe über der Grundschiene 1 aufweisen und die Auflageflächen 11a einen Winkel gegenüber der Horizontalen von 10 Grad aufweisen. Das Solarmodul 101 ist in dem Haltesystem somit mit einem Winkel von 10 Grad gegenüber der Horizontalen ausgerichtet.

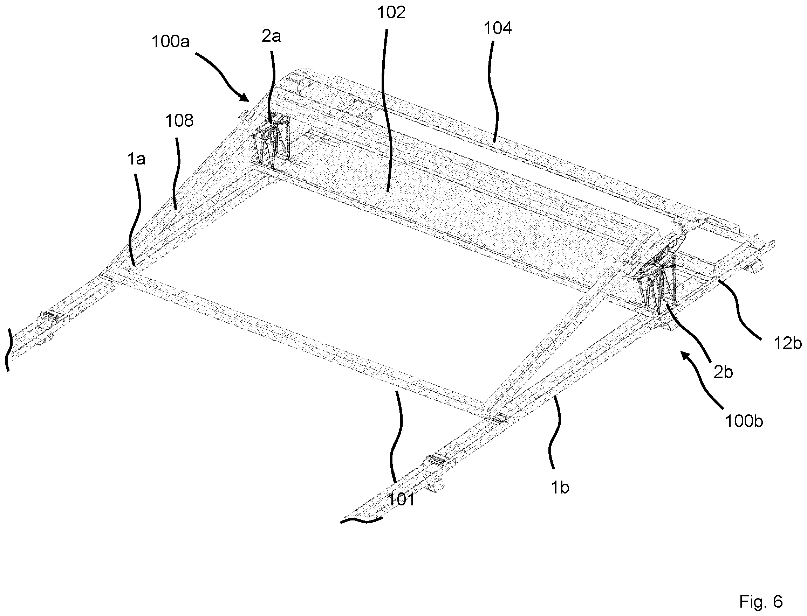

Die Fig. 6 zeigt eine Solarmodul-Anordnung in einer anderen Konfiguration. In der Solarmodul-Anordnung sind die oberen Stützen 2a, 2b jeweils mit den ersten Verbindungselementen 7a in den ersten Aufnahmeöffnungen 8a angeordnet, so dass die oberen Stützen 2a, 2b, dieselbe Höhe über der Grundschiene 1 aufweisen und die Auflageflächen 11a einen Winkel gegenüber der Horizontalen von 15 Grad aufweisen. Das Solarmodul 101 ist in dem Haltesystem gemäß der Fig. 6 somit mit einem Winkel von 15 Grad gegenüber der Horizontalen ausgerichtet.

In alternativen Ausgestaltungen können die Vorrichtungen 100a, 100b, insbesondere die oberen Stützen 2a, 2b, derart ausgestaltet sein, dass andere Winkel des Solarmoduls 101 einstellbar sind. Hierfür können Aufnahmeöffnungen und Stifte 5 sowie Bohrungen in denen diese aufgenommen sind derart ausgestaltet und angeordnet sein, dass sich bei einer entsprechenden Anordnung der ersten Stützenelemente 3a der oberen Stützen 2a, 2b die gewünschten Winkel des Solarmoduls 101 einstellen.

Es kann eine Anordnung mehrerer Solarmodule 101 in einer jeweiligen Anordnung gemäß einer der Fig. 5 oder 6 nebeneinander vorgesehen sein. Hierbei kann vorgesehen sein, dass zwei nebeneinander angeordnete Solarmodule 101 auf derselben Auflagefläche 11a nebeneinander gehalten sind, so dass an derselben oberen Stütze 2a, 2b zwei Solarmodule gehalten sind.

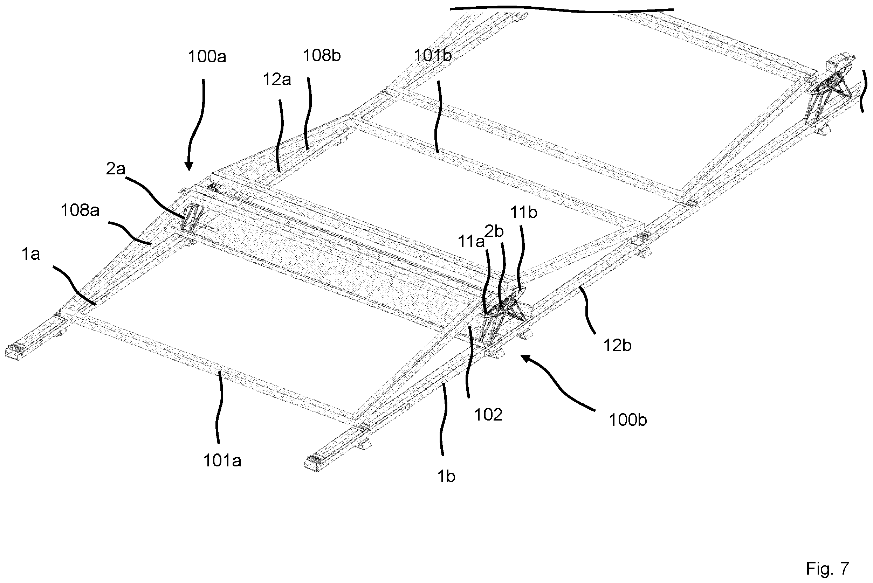

Die Fig. 7 zeigt eine weitere Solarmodul-Anordnung, in der zwei Solarmodule 101a, 101b hintereinander angeordnet sind. Hierbei liegt das erste Solarmodul 101a an einem oberen Ende auf gegenüberliegenden Seiten auf den Auflageflächen 11a der oberen Stützen 2a, 2b auf und ist von diesen gehalten. An seinem unteren Ende liegt das erste Solarmodul 101a mit den gegenüberliegenden Seiten jeweils auf den unteren Stützen 13a, 13b der Vorrichtungen 100a, 100b auf und wird von diesen gehalten. Das zweite Solarmodul 101b liegt an einem oberen Ende auf gegenüberliegenden Seiten auf den Auflageflächen 11b der oberen Stützen 2a, 2b auf und ist von diesen gehalten. An seinem unteren Ende liegt das zweite Solarmodul 101b mit den gegenüberliegenden Seiten jeweils auf unteren weiterer Vorrichtungen auf, welche im Übrigen nicht dargestellt sind, und wird von diesen gehalten. Es kann eine Anordnung mehrerer Paare von Solarmodulen 101a, 101b gemäß der Fig. 7 nebeneinander vorgesehen sein. Hierbei kann vorgesehen sein, dass zwei nebeneinander angeordnete Solarmodule 101a, 101b auf derselben Auflagefläche 11a, 11b nebeneinander gehalten sind, so dass an derselben oberen Stütze 2a, 2b vier Solarmodule gehalten sind.

In der Solarmodul-Anordnung gemäß der Fig. 7 sind die oberen Stützen 2a, 2b jeweils mit den ersten Verbindungselementen 7a in den zweiten Aufnahmeöffnungen 8b angeordnet, so dass die oberen Stützen 2a, 2b, dieselbe Höhe über der Grundschiene 1 aufweisen und die Auflageflächen 11a, 11b jeweils einen Winkel gegenüber der Horizontalen von 10 Grad aufweisen, wobei die Auflageflächen 11a, 11b in entgegengesetzte Richtungen absinkend angeordnet sind. Die Solarmodule 101a, 101b sind in der Solarmodul-Anordnung gemäß der Fig. 7 somit mit jeweils einem Winkel von 10 Grad gegenüber der Horizontalen gegenüberliegend und in entgegengesetzte Richtungen abgesenkt ausgerichtet.

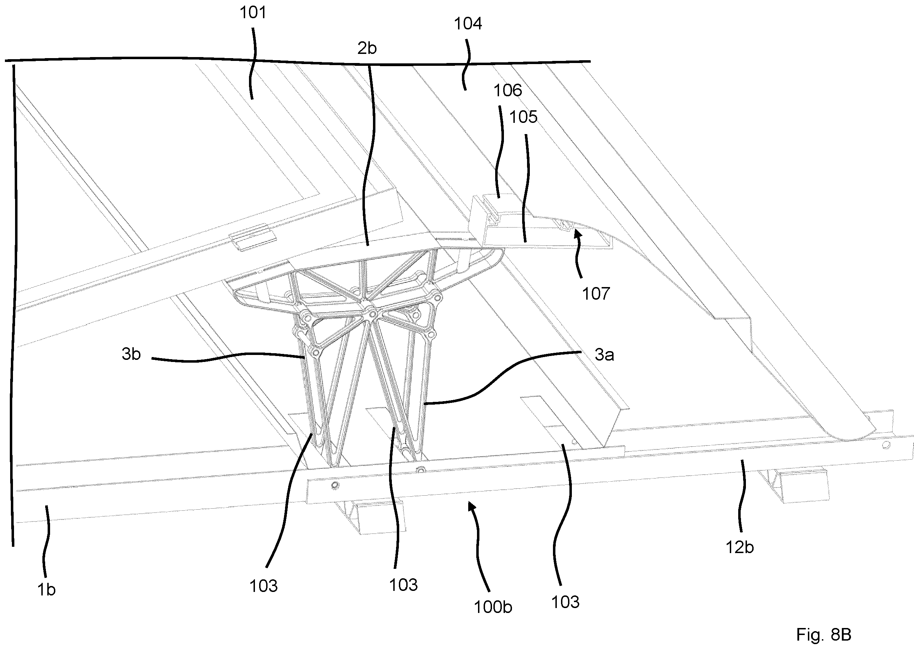

Die in den Fig. 5, 6 und 7 gezeigten Solarmodul-Anordnungen sind für eine Montage von Solarmodulen auf Flachdächern eingerichtet, wobei die offenbarten Haltesysteme auch für andere Anwendungen einsetzbar sind, beispielsweise eine freistehende Montage von Solarmodulen. Bei einer Flachdachmontage ist es in vielen Anwendungsfällen nicht möglich, das Haltesystem mit dem Dach zu verbinden. Aus diesem Grund, und in Ausgestaltungen, in denen eine Verbindung mit dem Flachdach möglich ist zur Erhöhung der Sicherheit, weisen die Haltesysteme der Solarmodul-Anordnungen gemäß den Ausführungen der Fig. 5, 6 und 7 Ballastwannen 102 auf, welche mit Ballast gefüllt werden können, um das Gewicht des Haltesystems zu erhöhen und so eine Bewegung des Haltesystems, beispielsweise durch Windeinwirkung, zu verhindern. Die Ballastwannen liegen an gegenüberliegenden Seiten in Randbereichen auf den Grundschienen 1a, 1b auf. Wie insbesondere in den Detailansichten der Fig. 8A und 8B zu erkennen ist, weisen die Ballastwannen 102 in den Randbereichen Öffnungen 103 auf. Die Öffnungen 103 sind so angeordnet und geformt, dass sie die Stützenelemente 3a, 3b in den verschiedenen Anordnungen der Verbindungselemente 7a, 7b in den Aufnahmeöffnungen 8a, 8b, 8c in den Öffnungen 103 aufgenommen werden. In der Fig. 8A ist dies für eine Konfiguration der Anordnung 100b für 10-Grad-Ausrichtung des Solarmoduls 101 gezeigt. Die Fig. 8B zeigt eine entsprechende Konfiguration für eine 15-Grad-Ausrichtung des Solarmoduls 101.

Durch die Formgebung der Stützenelemente 3a, 3b, insbesondere deren Verbreiterung nach oben und die schräge Ausrichtung der Streben der Metallguss-Teile 4, ist eine Bewegung der Ballastwanne 102 nach oben begrenzt. Ein (vollständiges) Abheben der Ballastwanne 102 von den Grundschienen 1a, 1b ist somit verhindert. Die Ballastwanne 102 ist auf diese Weise an dem Haltesystem gesichert.

Die in den Fig. 5 und 6 gezeigten Solarmodul-Anordnungen weisen zusätzlich jeweils einen hinteren Winddeflektor 104 auf. Der hintere Winddeflektor 104 ist mit einem geformten Blech gebildet und verhindert, dass Wind von hinten unter das jeweilige Solarmodul 101 strömt und dieses nach oben bewegt. Wie in den Detaildarstellungen der Fig. 8A und 8B beispielhaft für verschiedene Konfigurationen der oberen Stütze 2b gezeigt, ist an der Haltevorrichtung 10 der oberen Stütze 2b eine Deflektorhalterung 105 angeordnet. Die Deflektorhalterung 105 weist eine Auflagefläche 106 auf, welche konvex gerundet ausgeformt ist. Der hintere Winddeflektor 104 weist eine Kontaktfläche 107 auf, welche der Form der Auflagefläche 106 angepasst konkav gerundet ausgeformt ist. Hierbei ist die jeweilige Form der Auflagefläche 106 und der Kontaktfläche 107 derart gewählt, dass zwischen einer hohen Konfiguration der oberen Stütze 2b und einer niedrigen Konfiguration der oberen Stütze 2b der hintere Winddeflektor 104 auf der Auflagefläche 106 lediglich verschoben ist. Dies ist insbesondere im Vergleich der Fig. 8A und 8B zu erkennen. Derselbe hintere Winddeflektor 104 ist aufgrund der Formgebung der Kontaktfläche 107 somit in Verbindung mit der Deflektorhalterung 105 für die Verwendung in Haltesystemen bzw. Solarmodul-Anordnungen mit verschiedenen Winkelkonfigurationen von Solarelementen geeignet, beispielsweise sowohl für ein Haltesystem in 10-Grad-Konfiguration, wie beispielhaft in der Fig. 5 gezeigt, als auch für ein Haltesystem in 15-Grad-Konfiguration, wie beispielhaft in der Fig. 6 gezeigt.

Das obere Ende des hinteren Winddeflektors 104 ist an der Deflektorhalterung 105 mittels entsprechender Befestigungsmittel in der gewünschten Stellung fixiert. Beispielsweise kann der auf der Auflagefläche 106 angeordnete hintere Winddeflektor 104 an der Deflektorhalterung 105 angeschraubt oder mittels Klemmelementen fixiert sein. Ein unteres Ende des hinteren Winddeflektors 104 kann mittels einer unteren Stütze 13 gehalten sein. In der Fig. 8A ist beispielhaft gezeigt, dass das untere Ende des Winddeflektors 104 von einer unteren Stütze 13 einer im Übrigen nicht dargestellten hinter der Anordnung 100b angeordneten weiteren Anordnung gehalten wird. Alternativ kann das untere Ende des Winddeflektors 104 auf einem anderen Element aufliegen. In der Fig. 8B ist beispielhaft dargestellt, dass das hintere Ende des Winddeflektors 104 auf der als Sicherungsschiene 12b dienenden Verbindungsschiene der Anordnung 100b aufliegt.

Zusätzlich oder als Alternative zu einem hinteren Winddeflektor 104 können seitliche Winddeflektoren 108 vorgesehen sein, um zu verhindern, dass Wind von der Seite unter das jeweilige Solarmodul 101 strömt und dieses nach oben bewegt. In den Fig. 5 und 6 ist ein solcher seitlicher Winddeflektor 108 in Form eines Blechs an der jeweiligen Anordnung 100a gezeigt. Gemäß der Ausführung der Fig. 7 sind zwei seitliche Winddeflektoren 108a, 108b an der Anordnung 100a vorgesehen, welche zusammen die gesamte Seite des Haltesystems gegen Wind abschirmen. Zur besseren Übersicht sind in den Fig. 5, 6 und 7 an der jeweiligen Anordnung 100b keine seitlichen Winddeflektoren 108 dargestellt. Entsprechende seitliche Winddeflektoren 108 können jedoch auch für die Anordnungen 100b gemäß den Ausführungen der Fig. 5, 6 und 7 vorgesehen sein.

Alternativ oder ergänzend kann eine Kabelführung an den Stützenelementen 3a, 3b vorgesehen sein.

Fig. 9 zeigt eine schematische Darstellung einer Anordnung für eine Vorrichtung zum Stützen eines Solarmoduls mit der Grundschiene 1, an der als Teil der oberen Stütze das Stützelement 3a angeordnet ist. An der Grundschiene 1 ist eine weitere Ausführungsform der unteren Stütze 13 mit einem an der Grundschiene 1 schwenkbar gelagerten Stützbauteil 120 angeordnet. Der Abschnitt der Grundschiene 1 mit dem Stütz- oder Haltebauteil 120 ist in Fig. 10 vergrößert dargestellt. Das Stützbauteil 120 stellt zum Auflegen des Solarmoduls (nicht dargestellt) eine Auflagefläche 121 bereit, wobei nebeneinander gebildeten Auflageflächen 121, 122 ein Distanzzapfen 123 angeordnet ist, mit dem ein Anschlag für die beidseitig anzuordnenden Solarmodule gebildet ist. Das Haltebauteil 120 ist um eine Schwenkachse 124 schwenkbar an der Grundschiene 1 gelagert, die sich quer zur Längsrichtung der Grundschiene 1 erstreckt. In der in den Fig. 9 und 10 dargestellten Stellung umgreifen Haltekrallen 125 die Grundschiene 1 auf gegenüberliegenden Seiten und beabstandet zur Grundschiene 1, so dass in den Abstandsbereich zwischen Grundschiene 1 und Haltekralle 125 die Scherungsschiene 12 (nicht dargestellt) geschoben werden kann. Wird das Haltebauteil 120 um die Schwenkachse 124 geschwenkt, können die Haltekrallen 125 von dem in Fig. 10 gezeigten Eingriff gelöst werden (mittels Schwenken nach oben). Die schwenkbare Lagerung des Haltebauteils 120 ermöglicht so eine stufenlose Anpassung an unterschiedliche Neigungswinkel des Solarmoduls.

Gemäß der Darstellung in Fig. 10 sind im Bodenbereich 126 Ablaufrillen 127 in Längsrichtung der Grundschiene 1 ausgebildet, die dazu dienen, Wasser abzuleiten, insbesondere Regenwasser (vgl. auch Detaildarstellung in Fig. 14). Sind in die Grundschiene 1 Kabel eingelegt, so ist hierdurch vermieden, dass die Kabel im Wasser liegen. Das so über die Ablaufrillen 127 von der Grundschiene 1 ablaufende Wasser kann dann auf die darunterliegende Sicherungsschiene 12 gelangen und dort Vertiefungen 128, die an der Sicherungsschiene 12 gebildet sind, nach außen abgeführt werden. Mittels der Vertiefungen 128 und dem darüber angeordneten Boden der Sicherungsschiene sind Ablaufkanäle gebildet.

In den Fig. 11 bis 15 ist eine Ausführungsform gezeigt, bei der der seitliche Winddeflektor 108 vorgesehen ist. Gemäß Fig. 14 und 15 ist ein Abschnitt 130 des seitlichen Winddeflektors 108 in einer Vertiefung 131 an der Sicherungsschiene 12 aufgenommen und so in seiner Montageposition gesichert.

Das Solarmodul 101a ist mittels eines Klemmelements 132 an dem Haltebauteil 120 gesichert, wobei in der gezeigten Ausführung als mechanische Sicherung eine Schraubverbindung genutzt wird. Mittels zugeordneter Rastprofile 133 kann das Klemmelement 132 eingestellt werden, wodurch Solarmodule unterschiedlicher Höhe oder Dicke geklemmt werden.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

## Patentansprüche

1. Vorrichtung zum Stützen von Solarmodulen, mit
- einer Grundschiene (1), aufweisend eine erste Aufnahmeöffnung (8a);
- einer an der Grundschiene (1) angeordneten Stütze (2) für das Halten eines Endes eines Solarmoduls (101), aufweisend ein erstes Verbindungselement (7a), welches in der ersten Aufnahmeöffnung (8a) angeordnet ist; und
- einer Sicherungsschiene (12), welche die Grundschiene (1) wenigstens teilweise umgreifend auf der Grundschiene (1) angeordnet und entlang der Grundschiene (1) zwischen einer ersten Position und einer zweiten Position beweglich ist,
wobei
- die Sicherungsschiene (12) die erste Aufnahmeöffnung (8a) in der zweiten Position zumindest teilweise verschließt, derart, dass eine Bewegung des ersten Verbindungselements (7a) aus der ersten Aufnahmeöffnung (8a) heraus verhindert ist; und
- die Sicherungsschiene (12) die erste Aufnahmeöffnung (8a) in der ersten Position freigibt, derart, dass eine Bewegung des ersten Verbindungselements (7a) aus der ersten Aufnahmeöffnung (8a) heraus ermöglicht ist.

2. Vorrichtung nach Anspruch 1, mit einem Sicherungselement, welches eingerichtet ist, die Sicherungsschiene (12) in der zweiten Position zu sichern, derart, dass eine Bewegung der Sicherungsschiene (12) von der zweiten Position in die erste Position verhindert ist.

3. Vorrichtung nach Anspruch 2, wobei das Sicherungselement werkzeuglos zwischen einer Sicherungsstellung, in der eine Bewegung der Sicherungsschiene (12) von der zweiten Position in die erste Position verhindert ist, und einer Freigabestellung beweglich ist, in der eine Bewegung der Sicherungsschiene (12) von der zweiten Position in die erste Position möglich ist.

4. Vorrichtung nach mindestens einem der vorangehenden Ansprüche, wobei die Sicherungsschiene (12) mit einer Verbindungsschiene gebildet ist, welche eingerichtet ist, die Grundschiene (1) mit einer weiteren Grundschiene (1) einer weiteren Vorrichtung zu verbinden.

5. Vorrichtung nach mindestens einem der vorangehenden Ansprüche, wobei die erste Aufnahmeöffnung (8a) zumindest zu einer Oberseite der Grundschiene (1) hin geöffnet ist und die Sicherungsschiene (12) in der zweiten Position die erste Aufnahmeöffnung (8a) auf der Oberseite der Grundschiene zumindest teilweise bedeckt.

6. Vorrichtung nach mindestens einem der vorangehenden Ansprüche, wobei
- die Grundschiene (1) eine zweite Aufnahmeöffnung (8b) aufweist;
- die Stütze (2) eingerichtet ist, mit dem ersten Verbindungselement (7a) in der ersten Aufnahmeöffnung (8a) oder in der zweiten Aufnahmeöffnung (8b) angeordnet zu werden; und
- die Sicherungsschiene (12)
- die zweite Aufnahmeöffnung (8b) in der zweiten Position zumindest teilweise verschließt, derart, dass eine Bewegung des ersten Verbindungselements (7a) aus der zweiten Aufnahmeöffnung (8b) heraus verhindert ist; oder
- entlang der Grundschiene (1) in eine dritte Position beweglich ist, in der die Sicherungsschiene (12) zumindest die zweite Aufnahmeöffnung (8b) zumindest teilweise verschließt, derart, dass eine Bewegung des ersten Verbindungselements (7a) aus der zweiten Aufnahmeöffnung (8b) heraus verhindert ist.

7. Vorrichtung nach Anspruch 6, wobei
- die Stütze (2) in einer ersten Haltestellung angeordnet ist, in der die Stütze (2) eingerichtet ist, ein Solarmodul (101) in einem ersten Winkel relativ zu der Grundschiene (1) zu halten, wenn das erste Verbindungselement (7a) in der ersten Aufnahmeöffnung (8a) angeordnet ist; und
- die Stütze (2) in einer zweiten Haltestellung angeordnet ist, in der die Stütze (2) eingerichtet ist, ein Solarmodul (101) in einem zweiten Winkel relativ zu der Grundschiene (1) zu halten, der von dem ersten Winkel verschieden ist, wenn das erste Verbindungselement (7a) in der zweiten Aufnahmeöffnung (8b) angeordnet ist.

8. Vorrichtung nach mindestens einem der vorangehenden Ansprüche, wobei die Stütze (2) eine obere Stütze (2) für das Halten eines oberen Endes eines Solarmoduls (101) ist.

9. Vorrichtung nach Anspruch 8, mit einer an der Grundschiene (1) angeordneten unteren Stütze (13) für das Halten eines unteren Endes eines Solarmoduls.

10. Vorrichtung nach mindestens einem der vorangehenden Ansprüche, wobei die Grundschiene (1) eingerichtet ist, ein Kabel eines Solarmoduls (101) aufzunehmen und zu führen.

11. Vorrichtung nach mindestens einem der vorangehenden Ansprüche, wobei die Grundschiene (1) dafür eingerichtet ist, dass eine Seite einer Ballasthaltevorrichtung (102) auf ihr angeordnet wird, derart, dass die Ballasthaltevorrichtung (102) auf der Grundschiene (1) zumindest abschnittsweise aufliegt und die Stütze (2) eingerichtet ist, zumindest abschnittsweise in wenigstens einer Öffnung (103) der Ballasthaltevorrichtung (102) angeordnet zu werden, wenn diese auf der Grundschiene (1) zumindest abschnittsweise aufliegt, wobei die Stütze (2) derart geformt ist, dass sie hierbei eine Bewegung der Ballasthaltevorrichtung (102) nach oben im Wesentlichen verhindert.

12. Bausatz für eine Vorrichtung nach mindestens einem der vorangehenden Ansprüche, mit
- einer Grundschiene (1), aufweisend eine erste Aufnahmeöffnung (8a) und
- einer Stütze (2) für das Halten eines Endes eines Solarmoduls (101), aufweisend ein erstes Verbindungselement (7a); und
- einer Sicherungsschiene (12),
wobei
- die Stütze (1) eingerichtet ist, für das Herstellen einer Vorrichtung zum Stützen von Solarmodulen an der Grundschiene (1) angeordnet zu werden und das erste Verbindungselement (7a) eingerichtet ist, hierbei in der ersten Aufnahmeöffnung (8a) angeordnet zu werden; und
- die Sicherungsschiene (12) eingerichtet ist, die Grundschiene (1) wenigstens teilweise umgreifend auf der Grundschiene (1) angeordnet und entlang der Grundschiene (1) zwischen einer ersten Position und einer zweiten Position bewegt zu werden, wobei
- die Sicherungsschiene (12) die erste Aufnahmeöffnung (8a) in der zweiten Position zumindest teilweise verschließt, derart, dass eine Bewegung des ersten Verbindungselements (7a) aus der ersten Aufnahmeöffnung (8a) heraus verhindert ist; und
- die Sicherungsschiene (12) die erste Aufnahmeöffnung (8a) in der ersten Position freigibt, derart, dass eine Bewegung des ersten Verbindungselements (7a) aus der ersten Aufnahmeöffnung (8a) heraus ermöglicht ist.

13. Verfahren zum Herstellen einer Vorrichtung zum Stützen von Solarmodulen mit den Schritten:
- Bereitstellen einer Grundschiene (1) mit einer ersten Aufnahmeöffnung (8a);
- Anordnen einer Stütze (2) für das Halten eines Endes eines Solarmoduls (101) mit einem ersten Verbindungselement (7a) an der Grundschiene (1), wobei das erste Verbindungselement (7a) in der ersten Aufnahmeöffnung (8a) angeordnet wird;
- Anordnen einer Sicherungsschiene (12) auf der Grundschiene (1) und diese zumindest teilweise umgreifend in einer ersten Position, in der die Sicherungsschiene (12) die erste Aufnahmeöffnung (8a) freigibt, derart, dass eine Bewegung des ersten Verbindungselements (7a) aus der ersten Aufnahmeöffnung (8a) heraus ermöglicht ist; und
- Bewegen der Sicherungsschiene (12) entlang der Grundschiene (1) von der ersten Position in eine zweite Position, in der die Sicherungsschiene (12) die erste Aufnahmeöffnung (8a) zumindest teilweise verschließt, derart, dass eine Bewegung des ersten Verbindungselements (7a) aus der ersten Aufnahmeöffnung (8a) heraus verhindert ist.

14. Solarmodul-Anordnung, mit
- einer ersten Vorrichtung (100a) nach mindestens einem der Ansprüche 1 bis 11;
- einer zweiten Vorrichtung (100b) nach mindestens einem der Ansprüche 1 bis 11 und
- einem Solarmodul (101),
wobei
- die erste Vorrichtung (100a) und die zweite Vorrichtung (100b) zueinander derart angeordnet und ausgerichtet sind, dass die Grundschiene (1) der ersten Vorrichtung (100a) und die Grundschiene (1) der zweiten Vorrichtung (100b) im Wesentlichen parallel verlaufen und die Stütze (2) der ersten Vorrichtung (100a) der Stütze (2) der zweiten Vorrichtung (100b) direkt gegenüber angeordnet ist;
- das Solarmodul (101) mit einer ersten Seite auf der ersten Vorrichtung (100a) angeordnet ist, wobei ein Ende des Solarmoduls (101) im Bereich der ersten Seite von der Stütze (2) der ersten Vorrichtung (100a) gehalten wird, und mit einer der ersten Seite gegenüberliegenden zweiten Seite auf der zweiten Vorrichtung (100b) angeordnet ist, wobei das Ende des Solarmoduls (101) im Bereich der zweiten Seite von der Stütze (2) der zweiten Vorrichtung (100b) gehalten wird; und
- die Sicherungsschiene (12) der ersten Vorrichtung (100a) und die Sicherungsschiene (12) der zweiten Vorrichtung (100b) in der jeweiligen zweiten Position angeordnet sind, derart, dass die jeweilige erste Aufnahmeöffnung (8a) der Grundschienen (2) der ersten und der zweiten Vorrichtung (100a, 100b) zumindest teilweise verschlossen sind und eine Bewegung des jeweiligen ersten Verbindungselements (7a) der ersten und der zweiten Vorrichtung (100a, 100b) aus der jeweiligen ersten Aufnahmeöffnung (8a) heraus verhindert ist.

15. Solarmodul-Anordnung nach Anspruch 14, mit
- einer dritten Vorrichtung nach mindestens einem der Ansprüche 1 bis 11;
- einer vierten Vorrichtung nach mindestens einem der Ansprüche 1 bis 11 und
- einem weiteren Solarmodul (101),
wobei
- die dritte Vorrichtung derart hinter der der ersten Vorrichtung (100a) angeordnet und ausgerichtet ist, dass eine Längsachse der Grundschiene (1) der ersten Vorrichtung (100a) und eine Längsachse der Grundschiene (1) der dritten Vorrichtung im Wesentlichen aufeinander liegen;
- die vierte Vorrichtung derart hinter der der zweiten Vorrichtung (100b) angeordnet und ausgerichtet ist, dass eine Längsachse der Grundschiene (1) der zweiten Vorrichtung (100b) und eine Längsachse der Grundschiene (1) der vierten Vorrichtung im Wesentlichen aufeinander liegen;
- die dritte Vorrichtung und die vierte Vorrichtung zueinander derart angeordnet und ausgerichtet sind, dass die Stütze (2) der dritten Vorrichtung der Stütze (2) der vierten Vorrichtung direkt gegenüber angeordnet ist;
- das weitere Solarmodul (101) mit einer ersten Seite auf der dritten Vorrichtung angeordnet ist, wobei ein Ende des weiteren Solarmoduls (101) im Bereich der ersten Seite von der Stütze (2) der dritten Vorrichtung gehalten wird, und mit einer der ersten Seite gegenüberliegenden zweiten Seite auf der vierten Vorrichtung angeordnet ist, wobei das Ende des weiteren Solarmoduls (101) im Bereich der zweiten Seite von der Stütze (2) der vierten Vorrichtung gehalten wird;
- die Sicherungsschiene (12) der ersten Vorrichtung (100a)
- mit einem ersten Ende der Sicherungsschiene (12) der ersten Vorrichtung (100a) die Grundschiene (1) der ersten Vorrichtung zumindest teilweise umgreifend in der zweiten Position angeordnet ist und
- mit einem dem ersten Ende gegenüberliegenden zweiten Ende der Sicherungsschiene (12) der ersten Vorrichtung (100a) die Grundschiene (1) der dritten Vorrichtung zumindest teilweise umgreifend auf dieser angeordnet ist; und
- die Sicherungsschiene (12) der zweiten Vorrichtung (100b)
- mit einem ersten Ende der Sicherungsschiene (12) der zweiten Vorrichtung (100b) die Grundschiene (1) der zweiten Vorrichtung (100b) zumindest teilweise umgreifend in der zweiten Position angeordnet ist und
- mit einem dem ersten Ende gegenüberliegenden zweiten Ende der Sicherungsschiene (12) der zweiten Vorrichtung (100b) die Grundschiene (1) der vierten Vorrichtung zumindest teilweise umgreifend auf dieser angeordnet ist.

## Claims

1. A device for supporting solar modules, comprising
- a base rail (1) having a first receiving opening (8a);
- a support (2) arranged at the base rail (1) for holding one end of a solar module (101), comprising a first connecting element (7a) which is arranged in the first receiving opening (8a); and
- a securing rail (12) which is arranged on the base rail (1) such that it at least partially encompasses the base rail (1) and is movable along the base rail (1) between a first position and a second position,
wherein
- the securing rail (12) at least partially closes the first receiving opening (8a) in the second position in such a manner that a movement of the first connecting element (7a) out of the first receiving opening (8a) is prevented; and
- the securing rail (12) unblocks the first receiving opening (8a) in the first position in such a manner that a movement of the first connecting element (7a) out of the first receiving opening (8a) is made possible.

2. The device according to claim 1, comprising a securing element which is configured to secure the securing rail (12) in the second position in such a manner that a movement of the securing rail (12) from the second position to the first position is prevented.

3. The device according to claim 2, wherein the securing element is movable without tools between a securing position, in which a movement of the securing rail (12) from the second position to the first position is prevented, and an unblocking position in which a movement of the securing rail (12) from the second position to the first position is possible.

4. The device according to at least one of the preceding claims, wherein the securing rail (12) is formed with a connecting rail which is configured to connect the base rail (1) to a further base rail (1) of a further device.

5. The device according to at least one of the preceding claims, wherein the first receiving opening (8a) is open at least towards an upper side of the base rail (1) and the securing rail (12) in the second position at least partially covers the first receiving opening (8a) on the upper side of the base rail.

6. The device according to at least one of the preceding claims, wherein
- the base rail (1) has a second receiving opening (8b);
- the support (2) is configured to be arranged with the first connecting element (7a) in the first receiving opening (8a) or in the second receiving opening (8b); and
- the securing rail (12)
- closes the second receiving opening (8b) in the second position at least partially in such a manner that a movement of the first connecting element (7a) out of the second receiving opening (8b) is prevented; or
- is movable along the base rail (1) to a third position in which the securing rail (12) at least partially closes at least the second receiving opening (8b) in such a manner that a movement of the first connecting element (7a) out of the second receiving opening (8b) is prevented.

7. The device according to claim 6, wherein
- the support (2) is arranged in a first holding position in which the support (2) is configured to hold a solar module (101) at a first angle relative to the base rail (1) when the first connecting element (7a) is arranged in the first receiving opening (8a); and
- the support (2) is arranged in a second holding position in which the support (2) is configured to hold a solar module (101) at a second angle relative to the base rail (1), which second angle is different from the first angle, when the first connecting element (7a) is arranged in the second receiving opening (8b).

8. The device according to at least one of the preceding claims, wherein the support (2) is an upper support (2) for holding an upper end of a solar module (101).

9. The device according to claim 8, comprising a lower support (13) arranged on the base rail (1) for holding a lower end of a solar module.

10. The device according to at least one of the preceding claims, wherein the base rail (1) is configured to receive and guide a cable of a solar module (101).

11. The device according to at least one of the preceding claims, wherein the base rail (1) is configured for arranging thereon one side of a ballast holding device (102) in such a manner that the ballast holding device (102) rests at least in sections on the base rail (1) and the support (2) is configured to be arranged at least in sections in at least one opening (103) of the ballast holding device (102) when it rests at least in sections on the base rail (1), wherein the support (2) is shaped in such a manner that it substantially prevents an upward movement of the ballast holding device (102) in this case.

12. A kit for a device according to at least one of the preceding claims, comprising
- a base rail (1) having a first receiving opening (8a) and
- a support (2) for holding one end of a solar module (101), the support having a first connecting element (7a); and
- a securing rail (12),
wherein
- the support (1) is configured to be arranged at the base rail (1) for manufacturing a device for supporting solar modules and the first connecting element (7a) is configured in this case to be arranged in the first receiving opening (8a); and
- the securing rail (12) is configured to be arranged on the base rail (1) so as to at least partially encompass the base rail (1) and to be moved along the base rail (1) between a first position and a second position, wherein
- the securing rail (12) at least partially closes the first receiving opening (8a) in the second position in such a manner that a movement of the first connecting element (7a) out of the first receiving opening (8a) is prevented; and
- the securing rail (12) unblocks the first receiving opening (8a) in the first position in such a manner that a movement of the first connecting element (7a) out of the first receiving opening (8a) is made possible.

13. A method for manufacturing a device for supporting solar modules, comprising the steps:
- providing a base rail (1) comprising a first receiving opening (8a);
- arranging a support (2) for holding one end of a solar module (101) with a first connecting element (7a) at the base rail (1), wherein the first connecting element (7a) is arranged in the first receiving opening (8a);
- arranging a securing rail (12) on the base rail (1) and at least partially encompassing it in a first position in which the securing rail (12) unblocks the first receiving opening (8a) in such a manner that a movement of the first connecting element (7a) out of the first receiving opening (8a) is made possible; and
- moving the securing rail (12) along the base rail (1) from the first position to a second position in which the securing rail (12) at least partially closes the first receiving opening (8a) in such a manner that a movement of the first connecting element (7a) out of the first receiving opening (8a) is prevented.

14. A solar module arrangement, comprising
- a first device (100a) according to at least one of claims 1 to 11;
- a second device (100b) according to at least one of claims 1 to 11; and
- a solar module (101),
wherein
- the first device (100a) and the second device (100b) are arranged and oriented with respect to one another in such a manner that the base rail (1) of the first device (100a) and the base rail (1) of the second device (100b) extend substantially parallel and the support (2) of the first device (100a) is arranged directly opposite the support (2) of the second device (100b);
- the solar module (101) is arranged with a first side on the first device (100a), wherein one end of the solar module (101) is held in the region of the first side by the support (2) of the first device (100a), and is arranged with a second side opposite the first side on the second device (100b), wherein the end of the solar module (101) is held in the region of the second side by the support (2) of the second device (100b); and
- the securing rail (12) of the first device (100a) and the securing rail (12) of the second device (100b) are arranged in the respective second position such that the respective first receiving opening (8a) of the base rails (2) of the first and the second device (100a, 100b) are at least partially closed and a movement of the respective first connecting element (7a) of the first and the second device (100a, 100b) out of the respective first receiving opening (8a) is prevented.

15. The solar module arrangement according to claim 14, comprising
- a third device according to at least one of claims 1 to 11;
- a fourth device according to at least one of claims 1 to 11; and
- a further solar module (101),
wherein
- the third device is arranged and oriented behind the first device (100a) in such a manner that a longitudinal axis of the base rail (1) of the first device (100a) and a longitudinal axis of the base rail (1) of the third device are substantially superimposed;
- the fourth device is arranged and oriented behind the second device (100b) in such a manner that a longitudinal axis of the base rail (1) of the second device (100b) and a longitudinal axis of the base rail (1) of the fourth device are substantially superimposed;
- the third device and the fourth device are arranged and oriented with respect to one another in such a manner that the support (2) of the third device is arranged directly opposite the support (2) of the fourth device;
- the further solar module (101) is arranged with a first side on the third device, wherein one end of the further solar module (101) is held in the region of the first side by the support (2) of the third device, and is arranged with a second side opposite the first side on the fourth device, wherein the end of the further solar module (101) is held in the region of the second side by the support (2) of the fourth device;
- the securing rail (12) of the first device (100a)
- is arranged in the second position at least partially encompassing the base rail (1) of the first device (100a) with a first end of the securing rail (12) of the first device (100a) and
- is arranged on and at least partially encompassing the base rail (1) of the third device with a second end of the securing rail (12) of the first device (100a) opposite the first end; and
- the securing rail (12) of the second device (100b)
- is arranged in the second position at least partially encompassing the base rail (1) of the second device (100b) with a first end of the securing rail (12) of the second device (100b) and
- is arranged on and at least partially encompassing the base rail (1) of the fourth device with a second end of the securing rail (12) of the second device (100b) opposite the first end.

## Revendications

1. Dispositif pour supporter des modules solaires, avec
- un rail de base (1) comportant une première ouverture de logement (8a),
- un support (2) disposé au rail de base (1) pour le maintien d'une extrémité d'un module solaire (101), comportant un premier élément de liaison (7a), lequel est disposé dans la première ouverture de logement (8a), et
- un rail de fixation (12), lequel est disposé sur le rail de base (1) entourant au moins en partie le rail de base (1) et est mobile le long du rail de base (1) entre une première position et une deuxième position,
dans lequel
- le rail de fixation (12) ferme au moins en partie la première ouverture de logement (8a) dans la deuxième position de telle manière à éviter un mouvement du premier élément de liaison (7a) hors de l'ouverture de logement (8a), et
- le rail de fixation (12) libère la première ouverture de logement (8a) dans la première position de telle manière à permettre un mouvement du premier élément de liaison (7a) hors de la première ouverture de logement (8a).

2. Dispositif selon la revendication 1, avec un élément de fixation, lequel est agencé pour fixer le rail de fixation (12) dans la deuxième position de telle manière à éviter un mouvement du rail de fixation (12) de la deuxième position à la première position.

3. Dispositif selon la revendication 2, sachant que l'élément de fixation est mobile sans outil entre une position de fixation, dans laquelle un mouvement du rail de fixation (12) est évité de la deuxième position à la première position, et une position de libération, dans laquelle un mouvement du rail de fixation (12) est possible de la deuxième position à la première position.

4. Dispositif selon au moins l'une quelconque des revendications précédentes, sachant que le rail de fixation (12) est formé avec un rail de liaison, lequel est agencé pour relier le rail de base (1) à un autre rail de base (1) d'un autre dispositif.

5. Dispositif selon au moins l'une quelconque des revendications précédentes, sachant que la première ouverture de logement (8a) est ouverte au moins vers un côté supérieur du rail de base (1) et le rail de fixation (12) couvre, au moins en partie dans la deuxième position, la première ouverture de logement (8a) sur le côté supérieur du rail de base.

6. Dispositif selon au moins l'une quelconque des revendications précédentes, sachant que
- le rail de base (1) comporte une deuxième ouverture de logement (8b),
- le support (2) est agencé pour être disposé avec le premier élément de liaison (7a) dans la première ouverture de logement (8a) ou dans la deuxième ouverture de logement (8b), et
- le rail de fixation (12),
- ferme au moins en partie la deuxième ouverture de logement (8b) dans la deuxième position de telle manière à éviter un mouvement du premier élément de liaison (7a) hors de la deuxième ouverture de logement (8b), ou
- est mobile le long du rail de base (1) dans une troisième position dans laquelle le rail de fixation (12) ferme au moins en partie, au moins, la deuxième ouverture de logement (8b) de telle manière à éviter un mouvement du premier élément de liaison (7a) hors de la deuxième ouverture de logement (8b).

7. Dispositif selon la revendication 6, sachant que
- le support (2) est disposé dans une première position de maintien dans laquelle le support (2) est agencé pour maintenir un module solaire (101) dans un premier angle par rapport au rail de base (1), lorsque le premier élément de liaison (7a) est disposé dans la première ouverture de logement (8a), et
- le support (2) est disposé dans une deuxième position de maintien dans laquelle le support (2) est agencé pour maintenir un module solaire (101) dans un deuxième angle par rapport au rail de base (1), qui est différent du premier angle, lorsque le premier élément de liaison (7a) est disposé dans la deuxième ouverture de logement (8b).

8. Dispositif selon au moins l'une quelconque des revendications précédentes, sachant que le support (2) est un support supérieur (2) pour le maintien d'une extrémité supérieure d'un module solaire (101).

9. Dispositif selon la revendication 8, avec un support (13) inférieur disposé sur le rail de base (1) pour le maintien d'une extrémité inférieure d'un module solaire.

10. Dispositif selon au moins l'une quelconque des revendications précédentes, sachant que le rail de base (1) est agencé pour loger et guider un câble d'un module solaire (101).

11. Dispositif selon au moins l'une quelconque des revendications précédentes, sachant que le rail de base (1) est agencé, de telle sorte qu'un côté d'un dispositif de maintien de ballast (102) est disposé sur lui de telle manière que le dispositif de maintien de ballast (102) repose au moins en partie sur le rail de base (1) et le support (2) est agencé pour être disposé au moins en partie dans au moins une ouverture (103) du dispositif de maintien de ballast (102), lorsque celui-ci repose au moins en partie sur le rail de base (1), sachant que le support (2) est formé de telle manière qu'il évite pour l'essentiel à cet effet un mouvement du dispositif de maintien de ballast (102) vers le haut.

12. Kit pour un dispositif selon au moins l'une quelconque des revendications précédentes, avec
- un rail de base (1), comportant une première ouverture de logement (8a) et
- un support (2) pour le maintien d'une extrémité d'un module solaire (101) comportant un premier élément de liaison (7a), et
- un rail de fixation (12),
dans lequel
- le support (1) est agencé pour être disposé au rail de base (1) pour la fabrication d'un dispositif permettant de supporter des modules solaires et le premier élément de liaison (7a) est agencé pour être disposé à cet effet dans la première ouverture de logement (8a), et
- le rail de fixation (12) est agencé pour être disposé sur le rail de base (1) entourant au moins en partie le rail de base (1) et être déplacé le long du rail de base (1) entre une première position et une deuxième position, sachant que
- le rail de fixation (12) ferme au moins en partie la première ouverture de logement (8a) dans la deuxième position de telle manière à éviter un mouvement du premier élément de liaison (7a) hors de la première ouverture de logement (8a) et
- le rail de fixation (12) libère la première ouverture de logement (8a) dans la première position de telle manière à permettre un mouvement du premier élément de liaison (7a) hors de la première ouverture de logement (8a).

13. Procédé pour fabriquer un dispositif pour supporter des modules solaires avec les étapes de :
- préparation d'un rail de base (1) avec une première ouverture de logement (8a),
- mise en place d'un support (2) pour le maintien d'une extrémité d'un module solaire (101) avec un premier élément de liaison (7a) au rail de base (1), dans lequel le premier élément de liaison (7a) est disposé dans la première ouverture de logement (8a),
- mise en place d'un rail de fixation (12) sur le rail de base (1) et entourant au moins en partie celui-ci dans une première position dans laquelle le rail de fixation (12) libère la première ouverture de logement (8a) de telle manière à permettre un mouvement du premier élément de liaison (7a) hors de la première ouverture de logement (8a), et
- déplacement du rail de fixation (12) le long du rail de base (1) de la première position à une deuxième position dans laquelle le rail de fixation (12) ferme au moins en partie la première ouverture de logement (8a) de telle manière à éviter un mouvement du premier élément de liaison (7a) hors de la première ouverture de logement (8a).

14. Système de module solaire, avec
- un premier dispositif (100a) selon au moins l'une quelconque des revendications 1 à 11,
- un deuxième dispositif (100b) selon au moins l'une quelconque des revendications 1 à 11 et
- un module solaire (101),
dans lequel
- le premier dispositif (100a) et le deuxième dispositif (100b) sont disposés et orientés l'un par rapport à l'autre de telle manière que le rail de base (1) du premier dispositif (100a) et le rail de base (1) du deuxième dispositif (100b) passent pour l'essentiel de façon parallèle et le support (2) du premier dispositif (100a) est disposé directement face au support (2) du deuxième dispositif (100b),
- le module solaire (101) est disposé avec un premier côté sur le premier dispositif (100a), sachant qu'une extrémité du module solaire (101) est maintenue dans la zone du premier côté par le support (2) du premier dispositif (100a) et avec un deuxième côté opposé au premier côté est disposé sur le deuxième dispositif (100b), sachant que l'extrémité du module solaire (101) est maintenue dans la zone du deuxième côté par le support (2) du deuxième dispositif (100b), et
- le rail de fixation (12) du premier dispositif (100a) et le rail de fixation (12) du deuxième dispositif (100b) sont disposés dans la deuxième position respective de telle manière que la première ouverture de logement (8a) respective des rails de base (2) du premier et du deuxième dispositif (100a, 100b) sont au moins en partie fermées et un mouvement du premier élément de liaison (7a) respectif du premier et du deuxième dispositif (100a, 100b) hors de la première ouverture de logement (8a) respective est évité.

15. Système de module solaire selon la revendication 14, avec
- un troisième dispositif selon au moins l'une quelconque des revendications 1 à 11,
- un quatrième dispositif selon au moins l'une quelconque des revendications 1 à 11 et
- un autre module solaire (101),
dans lequel
- le troisième dispositif est disposé et orienté derrière le premier dispositif (100a) de telle manière qu'un axe longitudinal du rail de base (1) du premier dispositif (100a) et un axe longitudinal du rail de base (1) du troisième dispositif se trouvent pour l'essentiel l'un sur l'autre,
- le quatrième dispositif est disposé et orienté derrière le deuxième dispositif (100b) de telle manière qu'un axe longitudinal du rail de base (1) du deuxième dispositif (100b) et un axe longitudinal du rail de base (1) du quatrième dispositif se trouvent pour l'essentiel l'un sur l'autre,
- le troisième dispositif et le quatrième dispositif sont disposés et orientés l'un par rapport à l'autre de telle manière que le support (2) du troisième dispositif est disposé directement en face du support (2) du quatrième dispositif,
- l'autre module solaire (101) est disposé avec un premier côté sur le troisième dispositif, sachant qu'une extrémité de l'autre module solaire (101) est maintenue dans la zone du premier côté par le support (2) du troisième dispositif et est disposé avec un deuxième côté opposé au premier côté sur le quatrième dispositif, sachant que l'extrémité de l'autre module solaire (101) est maintenue dans la zone du deuxième côté par le support (2) du quatrième dispositif,
- le rail de fixation (12) du premier dispositif (100a)
- avec une première extrémité du rail de fixation (12) du premier dispositif (100a) est disposé dans la deuxième position entourant au moins en partie le rail de base (1) du premier dispositif, et
- avec une deuxième extrémité opposée à la première extrémité du rail de fixation (12) du premier dispositif (100a) est disposé sur celui-ci entourant au moins en partie le rail de base (1) du troisième dispositif, et
- le rail de fixation (12) du deuxième dispositif (100b)
- avec une première extrémité du rail de fixation (12) du deuxième dispositif (100b) est disposé dans la deuxième position entourant au moins en partie le rail de base (1) du deuxième dispositif (100b), et
- avec une deuxième extrémité opposée à la première extrémité du rail de fixation (12) du deuxième dispositif (100b) est disposé sur celui-ci entourant au moins en partie le rail de base (1) du quatrième dispositif.
